(19) **Europäisches Patentamt / European Patent Office / Office européen des brevets**

(11) **EP 3 383 651 B1**

(12) **EUROPEAN PATENT SPECIFICATION**

(45) Date of publication and mention
of the grant of the patent:
**28.09.2022 Bulletin 2022/39**

(21) Application number: **16805455.9**

(22) Date of filing: **02.12.2016**

(51) International Patent Classification (IPC):
**B32B 27/08** (2006.01)    **B32B 27/32** (2006.01)
**B65D 65/40** (2006.01)

(52) Cooperative Patent Classification (CPC):
**B32B 27/08; B32B 27/32;** B32B 2307/758;
B32B 2311/20; B32B 2439/00; B32B 2439/70

(86) International application number:
**PCT/EP2016/079677**

(87) International publication number:
**WO 2017/093541 (08.06.2017 Gazette 2017/23)**

(54) **ANTI-ODOUR MULTILAYER PACKAGING FILMS AND PACKAGES MADE THEREFROM**

GERUCHSHEMMENDE MEHRSCHICHTIGE VERPACKUNGSFILME UND DARAUS
HERGESTELLTE VERPACKUNGEN

FILMS D'EMBALLAGE MULTICOUCHES ANTI-ODEURS ET EMBALLAGES FABRIQUÉS À PARTIR
DE CEUX-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2015 EP 15197906**

(43) Date of publication of application:
**10.10.2018 Bulletin 2018/41**

(73) Proprietor: **Cryovac, LLC
Charlotte, NC 28208 (US)**

(72) Inventors:
• **SPIGAROLI, Romano
20025 Legnano (IT)**

• **STAFYLA, Eirini
20017 Rho (IT)**

(74) Representative: **PGA S.p.A.
Via Mascheroni, 31
20145 Milano (IT)**

(56) References cited:
**WO-A1-2006/011926    US-A1- 2008 292 225**

• **DATABASE WPI Week 201431 Thomson
Scientific, London, GB; AN 2014-G01297
XP002757373, -& JP 2014 061682 A (TOPPAN
PRINTING CO LTD) 10 April 2014 (2014-04-10)**

## Description

The present invention relates to anti-odour packaging films and to packages made therefrom. In particular, the present invention relates to anti-odour multilayer, optionally gas barrier, films including specific anti-odour compounds in at least in one inner layer, said inner layer being placed between the outer sealant layer and the optional inner gas-barrier layer.

### Background art

Many processes of degradation of the protein and lipid foods generate, as by products, smelly volatile substances, perceptible even when present in low concentrations. Certain food products, such as eggs products, poultry and processed poultry meats, can generate sulfur off odours. The origin of these odours is most likely enzymatic or microbial degradation of sulfur containing amino acids. This is particularly a problem in high oxygen barrier packaging. Hydrogen sulphide and other sulfur containing compounds, such as mercaptans, are generated during the normal shelf life of these products particularly at room temperature but also, even if to a lesser degree, under refrigerated storage. Poultry often forms sulfur-containing components during storage. Although the poultry may still be safe for consumption, the odours cause consumers to regard it as "spoiled" and return the poultry to the retailer. As a result, poultry is preferably not packaged in high barrier films due to the necessity for releasing the generated sulfur type off-odours. These factors limit the shelf-life of the fresh product to typically fourteen days or less after processing for chicken parts.

Hydrogen sulphide ($H_2S$) and mercaptans (RSH) volatile compounds, that represent some of the end products of protein degradation, can be seized with specific or non-specific absorbers (molecular sieves) included in the packaging material. These solutions are of particular interest for products based on eggs or meat (poultry in particular).

According to WO2006011926, various additives can be used as sulfur scavengers in packaging films, such as copper metal, copper foil or copper powder, where the copper is in the zero valence state; silica, hydrotalcite, zeolite or alumina treated with copper, either in the ionic or in the zero valence state; zinc acetate, zinc oxide, zinc stearate or zinc ionomer; iron oxide; copper (II) oxide; magnesium oxide (MgO); calcium oxide (CaO); alumina ($Al_2O_3$); ceria ($CeO_2$) and their blends. The anti-odour multilayer films exemplified in this prior art document comprise sulfur scavengers in the outer layer, layer that can function as sealant layer.

The document JP2014-061682 A describes laminated gas-barrier packaging bags in which a layer comprises a polyvalent metal compound, in particular zinc oxide. US2008/0292225 discloses in example 30 a film having an internal layer of a zinc ionomer. This document is about manually openable bags and such film is not stated to have anti-odour properties.

### Summary of the invention

In the Applicant knowledge, most prior art anti-odour packaging films comprise anti-odour compositions that, in the final package, are in contact with the packaged food. In case of anti-odour multilayer films, the anti-odour ingredients are generally included in the sealant layer composition. Generally, in the packaging field, it was believed that in order to have a quick and effective anti-odour activity the active anti-odour ingredients had to be incorporated into the layer closest to the gas source, namely into the food-contact layer.

However, incorporating the anti-odour ingredients within the sealant layer, besides raising safety concerns due to possible undesirable migrations to the food, may be troublesome.

In fact, the anti-odour compounds and their master batches may severely affect sealing performance of the film, for instance by increasing the polarity of the seal composition, its hygroscopicity and consequently by altering its sealability properties, especially through contaminants or grease. In other words, in the packaging art it would be highly desirable not to alter the fine-tuned performance of the sealant layer.

Furthermore, the presence of anti-odour ingredients in the sealant layer may be detrimental to processability of the film. In fact, addition of anti-odour ingredients may lower the melting point of the sealant layer, thus making extrusion and /or orientation troublesome because of its stickiness. Other drawbacks may include an undesirable meat adhesion and possible interference with oxy dry activity.

An important inconvenient of known hydrogen sulphide scavenging compounds is that they may worsen the optics of the film to an extent to make it unfit for packaging applications. In fact, packagers and customers desire a clear film so as the content of the package can be visually inspected from outside.

The Applicant has thus performed a research with the aim of improving the known anti-odour packaging films, in particular of avoiding the above mentioned drawbacks, possibly preserving or even improving the anti-odour performance.

The Applicant has surprisingly found that not only it is possible to maintain but even to enhance anti-odour overall performance of multilayer packaging films by incorporating certain anti-odour ingredients in inner layers compositions rather than in the sealant layer.

As will be explained in details herein below, the anti-odour multilayer films of the invention, even if the anti-odour ingredients are not included in the sealant layer and therefore are not in contact with the packaged food, can adsorb hydrogen sulphide and volatile mercaptans rather rapidly, effectively reducing the concentration of odours that are generated within the package. Furthermore, the Applicant realized that even low amounts of certain anti-odour compounds could provide for a very efficient odour reduction if said compounds are incorporated in particularly thin inner layers.

Finally, the present films in addition to a significant smell-adsorption capacity are also characterized by good transparency and gloss, providing for final packages in line with or even better than common optical market standard.

It is thus a first object of the present invention a coextruded anti-odour, multilayer, packaging film comprising at least

a first outer sealant layer (a);
an optional inner gas barrier layer (b);
a second outer layer (c); and
an inner anti-odour layer (d) placed between the sealant layer (a) and the optional barrier layer (b),
wherein said anti-odour layer (d) comprises
at least an anti-odour compound selected among metals (0), metal ionomers and their blends, in which said metal is selected among magnesium, calcium, copper, iron, cerium, zinc and lithium, zinc salts of organic acids of formula I

$$(RCOO)_2Zn \qquad I$$

in which R represents a linear or branched, saturated or unsaturated C3-C21 alkyl group, and their blends, and optionally, at least a polymer selected among polyolefins, polyolefin derivatives, polyesters, polyamides or their blends,
wherein the content by weight of metal ionomers in the anti-odour layer(s) (d) is at most 90%.

It is a second object of the present invention an article for packaging made from the film of the first object in the form of a seamless tube, a bag, a sachet, a pouch or a pad.

It is a third object of the present invention a package comprising an article for packaging according to the second object and a product, preferably a food product, packaged therein or therewith.

It is a fourth object of the present invention a package comprising a tray, a product, preferably a food product, packaged therein and a lidding film sealed along the tray flange and closing said package, in which said film is a film according to the first object.

It is a fifth object of the present invention an anti-odour vacuum skin package (VSP) comprising a top film, a support and a product preferably a food product loaded onto said support, said film being draped over the product and sealed to the surface of the support not covered by the product, wherein said top film and/or said support is a film according to the first object.

It is a sixth object of the present invention the use of a film according to the first object for packaging smell-developing products, preferably smell-developing food products, especially poultry.

Definitions

As used herein the sentence "smell-developing products" refers to food and non-food products which develop unpleasant odours well before the term of their shelf-life, in particular which develop volatile sulphides and sulphur derivatives such as for instance eggs, eggs products, poultry etc. etc....

As used herein, the term "anti-odour" refers to film, masterbatch, and compound property of absorbing and/or reacting with volatile bad smelling compounds, in particular hydrogen sulphide, with the final effect of lowering their concentration in the air close to or below the threshold of human perception. In particular "sulphur-scavenger" and the like means or refers to a composition, compound, film, film layer, coating or the like which preferably can consume, deplete or react with hydrogen sulphide or low molecular weight mercaptans from a given environment.

As used herein, the term "film" refers to plastic web, regardless of whether it is film or sheet or tubing. As used herein, the terms "inner layer" and "internal layer" refer to any film layer having both of its principal surfaces directly adhered to another layer of the film.

As used herein, the sentence "outer layer" or "external layer" refers to any film layer having only one of its principal surfaces directly adhered to another layer of the film.

As used herein, the sentences "sealant layer", "sealing layer", "heat sealant layer", and "seal layer", refer to an outer film layer involved in the sealing of the film to itself, to another layer of the same or to another film, and/or to another article which is not a film.

As used herein, the sentences "tie layer" and "adhesive layer" refer to any inner film layer having the primary purpose of adhering two layers to each other. Tie layers may be disposed between the respective layers in case where a sufficient adhesion is not ensured between adjacent layers. In the present invention, tie layers may also exert the function of anti-odour layers.

The adhesive resin may preferably comprise one or more polyolefins, one or more modified polyolefins or a blend of the above. Specific, not limitative, examples thereof may include ethylene- vinyl acetate copolymers, ethylene-(meth)acrylate copolymers, ethylene/a-olefin copolymers, any of the above modified with carboxylic or preferably anhydride functionalities, elastomers, and a blend of these resins.

Additional "core layers" other than the above inner layers can be present in the films of the present invention, "core layer" meaning any other inner film layer that preferably has a function other than serving as an adhesive or compatibilizer for adhering two layers to one another. In the present invention, core layers may also exert the function of anti-odour layers.

As used herein, a (s) placed at the end of a word, is generally meant to include both singular and plural meanings.

As used herein, the term "layer(s) (d)" is meant to cover both a single layer (d) and more than one layer (d) that may be present in the film of the invention. In the present description and claims, the content of anti-odour compound or metal, expressed in % by weight with respect to layer(s)(d), is referred either to their content in the single anti-odour layer (d) or, in case of more than one layer (d), to their total content with respect to the total weight of all layers (d).

As used herein, the sentences "machine direction", herein abbreviated "MD," and "longitudinal direction", herein abbreviated "LD", refer to a direction "along the length" of the film, i.e., in the direction of the extrusion of the film.

As used herein, the sentence "transverse direction", herein abbreviated "TD", refers to a direction across the film, perpendicular to the machine or longitudinal direction.

As used herein, the term "adhered" refers to film layers having a principal surface directly or indirectly (via one or more additional layers between them) in contact with one another via coextrusion, extrusion coating, or lamination via adhesive. As used herein, film layers, which are "directly adhered", have a principal surface in direct contact with one another, without an adhesive or other layer between them. As used herein, a layer specified as being "between" two other layers includes direct adherence of the specified layer to both other layers, direct adherence of the specified layer to the first of the other layers and indirect adherence of the specified layer to the second of the other layers, as well as indirect adherence of the principal layer to both other layers.

As used herein, the term "polymer" refers to the product of a polymerization reaction, and is inclusive of homopolymers, and copolymers. As used herein, the term "homopolymer" is used with reference to a polymer resulting from the polymerization of a single monomer, i.e., a polymer consisting essentially of a single type of mer, i.e., repeating unit. As used herein, the term "copolymer" refers to polymers formed by the polymerization reaction of at least two different monomers. For example, the term "copolymer" includes the copolymerization reaction product of ethylene and an alpha-olefin, such as 1-hexene. When used in generic terms the term "copolymer" is also inclusive of, for example, terpolymers. The term "copolymer" is also inclusive of random copolymers, block copolymers, and graft copolymers.

As used herein, the term "polyolefin" refers to any polymerized olefin, which can be linear, branched, cyclic, aliphatic, aromatic, substituted, or unsubstituted. Polyolefin includes olefin homopolymer and olefin copolymers. Specific examples include ethylene homopolymer, propylene homopolymer, butene homopolymer, ethylene alpha-olefin copolymers, and the like, propylene/alpha-olefin copolymer, butene/alpha-olefin copolymer and the like.

As used herein, the terms "polyolefin derivatives" or "modified polyolefin" include copolymers of an olefin and a non-olefinic co-monomer co-polymerizable with the olefin such as vinyl monomers, modified polymers thereof, and the like. Specific examples include ethylene/unsaturated ester copolymer (e.g. ethylene/ethyl acrylate copolymer, ethylene/butyl acrylate copolymer, ethylene/methyl acrylate copolymer), ethylene/unsaturated acid copolymer (e.g., ethylene/acrylic acid copolymer, ethylene/methacrylic acid copolymer), ethylene/vinyl acetate copolymer, ionomer resins, polymethylpentene.

In particular modified polymers prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like are included. It is also inclusive of modified polymers obtained by incorporating into the olefin homopolymer or copolymer, by blending with or grafting to the polymer chain an unsaturated carboxylic acid, e.g., maleic acid, fumaric acid or the like, or a derivative thereof such as the anhydride, ester or metal salt or the like.

As used herein, the sentence "ethylene/alpha-olefin copolymer" refers to heterogeneous and to homogeneous polymers such as linear low density polyethylene (LLDPE) with a density usually in the range of from about 0.900 g/crri3 to about 0.930 g/cm^, linear medium density polyethylene (LMDPE) with a density usually in the range of from about 0.930 g/cm^ to about 0.945 g/cm^, and very low and ultra low density polyethylene (VLDPE and ULDPE) with a density lower than about 0.915 g/cm$^3$ , typically in the range 0.868 to 0.915 g/cm^, and such as metallocene- catalyzed Exact® and Exceed® homogeneous resins obtainable from Exxon, single-site Affinity® resins obtainable from Dow, and Tafmer® homogeneous ethylene/a-olefin copolymer resins obtainable from Mitsui. All these materials generally include copolymers of ethylene with one or more comonomers selected from C4-10 a-olefin such as butene-1 , hexene-1 , octene-1 , etc., in which the molecules of the copolymers comprise long chains with relatively few side chain branches or cross-linked structures.

As used herein, the sentence "heterogeneous polymer" or "polymer obtained by heterogeneous catalysis" refers to polymerization reaction products of relatively wide variation in molecular weight and relatively wide variation in composition distribution, i.e., typical polymers prepared, for example, using conventional Ziegler- Natta catalysts, for example, metal halides activated by an organometallic catalyst, i.e., titanium chloride, optionally containing magnesium chloride, complexed to trialkyl aluminum and may be found in patents such as U.S. Patent No. 4,302,565 to Goeke et al. and U.S. Patent No. 4,302,566 to Karol, et al. Heterogeneous catalyzed copolymers of ethylene and an olefin may include linear low-density polyethylene (LLDPE), very low-density polyethylene (VLDPE) and ultra low- density polyethylene (ULDPE). Some copolymers of this type are available from, for example, The Dow Chemical Company, of Midland, Michigan., U.S.A. and sold under the trademark Dowlex® resins.

As used herein, the sentence "homogeneous polymer" or "polymer obtained by homogeneous catalysis" or "single site catalyzed (ssc) polymer" refers to polymerization reaction products of relatively narrow molecular weight distribution and relatively narrow composition distribution. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. This term includes those homogeneous polymers prepared using metallocenes, or other single-site type catalysts (ssc), as well as those homogenous polymers that are obtained using Ziegler-Natta type catalysts in homogenous catalysis conditions. The copolymerization of ethylene and a-olefins under homogeneous catalysis includes, for example, copolymerization with metallocene catalysis systems, which include constrained geometry catalysts, i.e., monocyclopentadienyl transition-metal complexes, is described in U.S. Patent No. 5,026,798 to Canich.

Homogeneous ethylene/a-olefin copolymer (homogeneous EAO) includes modified or unmodified linear homogeneous ethylene/a-olefin copolymers marketed as Tafmer® resins by Mitsui Petrochemical Corporation of Tokyo, Japan, and modified or unmodified linear homogeneous ethylene/a-olefin copolymers marketed as Exact® resins by ExxonMobil Chemical Company of Houston, Texas, U.S.A. and modified or unmodified homogeneous ethylene/a-olefin copolymers having a long-chain branching marketed as Affinity® brand resins by The Dow Chemical Company. As used herein, a "long-chain branched" ethylene/a-olefin copolymer refers to copolymer having branches with a length comparable to the length of the main polymer chain. Long chain branched ethylene/a-olefin copolymer has an I10/I2 ratio (namely the ratio of melt indices at 10 kg and 2.16 kg) of at least 6, or at least 7, or from 8 to 16.

Ethylene-unsaturated acid polymers include homopolymers and copolymers having an acrylic acid and/or a methacrylic acid linkage between monomer units. Acrylic acid-based resins may be formed by any method known to those skilled in the art and may include polymerization of acrylic acid, or methacrylic acid in the presence of light, heat, or catalysts such as benzoyl peroxides, or by the esters of these acids, followed by saponification. Examples of acrylic acid-based resins include, but are not limited to, ethylene/acrylic acid copolymer (EAA), ethylene/methacrylic acid copolymer (E/ AA), and blends thereof.

Ethylene-unsaturated ester polymers include homopolymers and copolymers having an ester of acrylic acid linkage between the monomer units. Acrylate-based resins may be formed by any method known to those skilled in the art, such as, for example, polymerization of the acrylate monomer by the same methods as those described for acrylic acid-based resins. Examples of acrylate- based resin include, but are not limited to, methyl/methacrylate copolymer (MMA), ethylene/vinyl acrylate copolymer (EVA), ethylene/methacrylate copolymer (EMA), ethylene/n-butyl acrylate copolymer (EnBA), and blends thereof.

As used herein, the sentence "ethylene/vinyl acetate" (EVA) refers to a copolymer formed from ethylene and vinyl acetate monomers wherein the ethylene units are present in a major amount and the vinyl-acetate units are present in a minor amount. The typical amount of vinyl-acetate may range from about 5 to about 20 weight %.

As used herein the term "ionomer resin" refers to a copolymer based on metal salts of copolymers of ethylene and a vinyl monomer with an acid group, such as methacrylic acid, and are cross-linked polymers in which the linkages are ionic (i.e., interchain ionic bonding) as well as covalent bonds. Ionomer resins have positively and negatively charged groups, which are not associated with each other, providing the resin with a polar character. The metal can be in the form of a monovalent or divalent ion such as lithium, sodium, potassium, calcium, magnesium and zinc. Unsaturated organic acids include acrylic acid and methacrylic acid. Unsaturated organic ester includes methacrylate and isobutyl acrylate. Ionomer resin can include a mixture of two or more ethylene/ unsaturated organic acid or ester copolymers.

As used herein, the sentence "gas barrier layer" refers to a layer containing a resin that limits the passage of one or more gases (e.g. oxygen, carbon dioxide, etc.) through the layer. As used herein, the sentence "barrier layer" refers to a layer made from a polymer that serves as a barrier to the transmission of 02, evaluated at 23°C and 0 % relative humidity. An oxygen barrier layer can provide an oxygen transmission rate, according to ASTM D- 3985, of less than 500 cm³/m²·day atm, preferably lower than 100 cm³/m²·day atm, lower than 50 cm3/m2·day atm or even lower.

As used herein, the sentence "gas permeable layer" refers to a layer containing resins that do not limit the passage of one or more gases, in particular of H2S, through the layer.

For instance, referring to oxygen, the OTR of an oxygen permeable films, is of at least 2,000 $cm^3/m^2$·day atm when measured at 23°C and 0 % of relative humidity, such as for instance at least 2,500 or at least 3,000 or at least 3,500, and more preferably at least 4,000, such as for instance at least 5,000 or at least 8,000 or at least 10,000 $cm^3/m^2$·day atm, OTR being measured according to ASTM D3985.

As used herein, the sentences "flexible container" and "packaging article", are inclusive of end-seal bags, side-seal bags, L- seal bags, U-seal bags (also referred to as "pouches"), gusseted bags, backseamed tubings, and seamless casings. As used herein, the term "bag" refers to a packaging container having an open top, side edges, and a bottom edge. The term "bag" encompasses lay-flat bags, pouches, and casings, including seamless casings and backseamed casings, the latter including lap-sealed casings, fin-sealed casings, and butt-sealed backseamed casings having backseaming tape thereon. Various bag and casing configurations are disclosed in US6764729 and US6790468 including L- seal bags, backseamed bags, and U-seal bags.

As used herein, the sentence "seamless tubing or tube" refers to a tubing in the absence of a heat seal running the length of the tubing. Seamless tubing are generally made by extrusion through a round die. In such a case, the first outer layer is the inside layer of the tubing and serves as the heat-sealing layer for the sealing of the inside layer to itself in the final flexible package.

As used herein, the term "package" is inclusive of packages made from such flexible containers by placing a product in the container and sealing the container so that the product is substantially surrounded by the heat-shrinkable anti-odour multilayer film from which the packaging container is made. Further, the term package also includes trays and rigid containers with products placed therein, in which said trays or rigid containers are closed with a lid film sealed along the flange.

In particular, the term "package" is inclusive of all of the various components used in the packaging of a product, i.e., all components of the packaged product other than the product within the package. The package is inclusive of, for example, a rigid support member, all films used to surround the product and/or the rigid support member, an absorbent component such as a pad, and even the atmosphere within the package, together with any additional components used in the packaging of the product. As used herein, the terms "Coextrusion" or "Coextruded" refer to the process and to the films so obtained in which two or more materials are extruded through a single die with two or more orifices arranged so that the extrudates merge and weld together into a laminar structure before chilling, i.e., quenching. Coextrusion is a process different from lamination.

As used herein, the term "extrusion coating" refers to processes by which a film of molten polymer is extruded onto a solid substrate (e.g., a nonwoven), in order to coat the substrate with the molten polymer film to bond the substrate and film together.

As used herein, the terms "Lamination" or "Laminated" refer to the process and to the products so obtained by which a first film or solid substrate is joined to a second film or solid substrate by adhesive bonding, thermal welding, solvent welding, ultrasonic bonding and combinations thereof (no coextrusion).

"Joined" refers to configurations whereby an element is directly secured to another element by affixing the element directly to the other element and to configurations whereby an element is indirectly secured to another element by affixing the element to intermediate member(s), which in turn are affixed to the other element. Materials may be joined by one or more bonding processes including adhesive bonding, thermal welding, solvent welding, ultrasonic bonding, extrusion bonding, and combinations thereof

As used herein, the term "oriented" refers to a thermoplastic web, which has been elongated, at a temperature above the softening temperature, in either one direction ("uniaxial") or two directions ("biaxial"), followed by cooling the film to "set" it while substantially retaining the elongated dimensions. Solid-state orientation at a temperature above the softening point produces a film exhibiting heat shrink character upon subsequent heating. Orientation in the melt state, as in the production of a blown film, does not result in a heat shrinkable film. Orientation in both the melt state and the solid state increase the degree of alignment of the polymer chains, thereby enhancing the mechanical properties of the resulting oriented film.

As used herein, the term "heat-shrinkable," "heat-shrink," and the like, refer to the tendency of the film to shrink upon the application of heat, i.e., to contract upon being heated, such that the size of the film decreases while the film is in an unrestrained state.

Free shrink is measured in accordance with ASTM D 2732, and is the percent dimensional change in a 10 cm × 10 cm specimen of film when subjected to a selected heat, by immersing the specimen for 5 seconds in a heated water bath at 85°C. As used herein, the term "heat- shrinkable" is used with reference to a film exhibiting a free shrink at 85°C of at least 5% in at least one direction (MD and/or TD) and with a total (MD+TD) free shrink at 85°C of at least 10%, measured in accordance with ASTM D2732.

As used herein, the sentence "non-heat-shrinkable" is used with reference to a film exhibiting a free shrink at 85°C of less than 5% in the machine direction (MD) and/or less than 5% in the transverse direction (TD), with a total (MD+TD) free shrink at 85°C of less than 10%, measured in accordance with ASTM D2732.

As used herein, the terms "vacuum skin packaging" or "VSP" indicate that the product is packaged under vacuum and the space containing the product is evacuated from gases at the moment of packaging. The top flexible film, which is draped over the product as a skin, is referred to as "top film" or "top web".

As used herein, the terms "top film" or "top web" are used referring to the film, which according to a conventional VSP packaging process is heated into the dome of the VSP equipment.

As used herein, the phrase "a film for use as a top web in VSP applications" refers to a thermoplastic film which is suitable for use in a VSP process, namely a film able to stand heating and stretching conditions within the vacuum chamber of the packaging machine without undergoing perforations and excessive softening and, afterwards, able to tight adhering to the surface of the support. Preferably, a film for use as a top web in VSP applications is characterized by high implosion resistance, formability and sealability.

As used herein, the term" VSP package" refers to a vacuum skin package, comprising a top film, a support and a product preferably a food product loaded onto said support wherein the top film is heated, moulded down upon and around the product and against the support, the space between the heated upper film and the support having been evacuated. The upper heated web forms a tight skin around the product and is sealed to the surface of the support not covered by the product, by differential air pressure.

All compositional percentages used herein are presented on a "by weight" basis, unless otherwise designated.

Drawings

Figure 1 is a graph reporting the percentage by weight of $H_2S$ absorbed over time by the tested films (REF A, C1, Ex. 1) at20°C;

Figure 2 is a graph reporting the percentage by weight of H2S absorbed over time by the tested films (REF B, C3, C4 and C5) at 20°C;

Figure 3 is a graph reporting the percentage by weight of H2S absorbed over time by the tested films (REF B, Ex. 7, Ex. 8 and Ex. 9) at 20°C;

Figure 4 is a graph reporting the percentage by weight of H2S absorbed over time by the tested films (REF B, C3, C4 and C5) at 4°C;

Figure 5 is a graph reporting the percentage by weight of H2S absorbed over time by the tested films (REF B, Ex. 7, Ex. 8 and Ex. 9) at 4°C.

Figure 6 is a graph reporting the percentage by weight of H2S absorbed over time by the tested films (REF B, Ex. 10 and Ex. 13) at 20°C.

Figure 7 is a graph reporting the percentage by weight of $H_2S$ absorbed over time by the tested films (REF D, Ex. 16 and Ex. 17) at 20°C.

Detailed description of the invention

The first object of the present invention a coextruded multilayer, anti-odour, packaging film comprising at least

a first outer sealant layer (a);
an optional inner gas barrier layer (b);
a second outer layer (c); and
an inner anti-odour layer (d) placed between the sealant layer (a) and the optional barrier layer (b), wherein said anti-odour layer (d) comprises
at least an anti-odour compound selected among metals (0), metal ionomers and their blends, in which said metal is selected among magnesium, calcium, copper, iron, cerium, zinc and lithium, zinc salts of organic acids of formula I

$$(RCOO)_2Zn \qquad I$$

in which R represents a linear or branched, saturated or unsaturated C3-C21 alkyl group, and their blends, and optionally, at least a polymer selected among polyolefins, polyolefin derivatives, polyesters, polyamides or their blends,
wherein the content by weight of metal ionomers in the anti-odour layer(s) (d) is at most 90%.

The film of the invention is characterized by one or more of the following features, taken alone or in combination.

The first outer sealant layer (a) of the film of the present invention comprises one or more polymers that are generally used to formulate packaging film sealant layers, namely polymers with high seal strength and ease of heat sealing.

Preferably, said one or more polymers are selected among polyolefin homo or copolymers and polyolefin derivatives and their blends, more preferably are selected among ethylene, propylene homo and copolymers, ethylene/alpha olefin copolymers, homogeneous ethylene/a-olefin copolymer, heterogeneous ethylene/a-olefin copolymer ethylene/vinyl acetate copolymers, ionomer resin, ethylene/ acrylic or methacrylic acid copolymer, ethylene/ acrylate or methacrylate copolymer, low density polyethylene, or their blends.

The ethylene/a-olefin copolymers include heterogeneous copolymers such as linear low density polyethylene (LLDPE) having a density of from 0.91 to 0.93 g/cm3, linear medium density polyethylene (LMDPE) having a of from about 0.93 g/cm3 to about 0.945 g/cm3 , and very low and ultra- low density polyethylene (VLDPE and ULDPE) with a density lower than about 0.915 g/cm3 as well as homogeneous copolymers such as metallocene-catalyzed Exact® and Exceed® homogeneous resins obtainable from Exxon, single-site catalyzed Affinity® resins obtainable from Dow (e.g., Affinity® PL 1281 G1 and Affinity® PL 1845G homogeneous ethylene/octene copolymers having limited long chain branching), and Tafmer® homogeneous ethylene/a-olefin copolymer resins obtainable from Mitsui. The Exact®, Exceed®, and Tafmer® resins are copolymers of ethylene with one or more comonomers selected from C4-10 alpha-olefins such as butene-1, hexene-1 , octene-1 , etc., comprise long chains with relatively few side chain branches or cross-linked structures. These polymers can be advantageously blended in various percentages to tailor the sealing properties of the films depending on their use in packaging, as known by those skilled in the art. Resins for use in the heat sealant layer can have a seal initiation temperature lower than 110°C, or lower than 105°C, or lower than 100°C. Preferably, the outer sealant layer (a) comprises a polymer selected among ethylene-vinyl acetate copolymers (EVA), homogeneous or heterogeneous linear ethylene/a-olefin copolymers and blends thereof.

Preferably the outer sealant layer (a) comprises at least 70%, 80%, 90% or 95% by weight of one or more polymers selected among polyolefin homo or copolymers and polyolefin derivatives and their blends, more preferably are selected among ethylene, propylene homo and copolymers, ethylene/alpha olefin copolymers, homogeneous ethylene/a-olefin copolymer, heterogeneous ethylene/a-olefin copolymer ethylene/vinyl acetate copolymers, ionomer resin, ethylene/ acrylic or methacrylic acid copolymer, ethylene/ acrylate or methacrylate copolymer, low density polyethylene, or their blends.

Optionally, the first outer sealant layer (a) may comprise one or more anti-odour compounds as herein defined. However, preferably, the sealant layer a) does not include more than 1%, 0.5% 0.1% 0.05% by weight of anti-odour compound, more preferably does not include any anti-odour compound. Preferably, the first outer sealant layer (a) does not comprise any anti-odour compound selected among metals (0), metal oxides, metal salts of organic acids, metal ionomers and their blends. Preferably, the first outer sealant layer (a) does not comprise any anti-odour compound selected among zinc salts of organic acids of formula I

$$(RCOO)_2Zn \qquad I$$

in which R represents a linear or branched, saturated or unsaturated $C_1$-$C_{23}$ alkyl group, optionally substituted with at least an OH group, and their blends.

Preferably, the first outer sealant layer (a) does not comprise any anti-odour compound selected among metal ionomers.

Optionally, additional materials may be incorporated into the outer sealant layer of the film such as antiblock agents, slip agents and other common additives known in the packaging field.

The heat-sealant layer (a) of the film of the present invention can have a typical thickness of from 2 to 20 microns, or from 3 to 15 microns, or from 5 to 12 microns.

The optional inner gas barrier layer (b)) of the film of the present invention may comprise high oxygen barrier materials having an oxygen permeability, lower than 100 cm3 $O_2$ / m2 - day - atmosphere (evaluated at 23°C and 0 % relative humidity, per ASTM D-3985), more preferably lower than 80 or 50 and most preferably lower than 25, than 10, than 5 and even lower than 1 cm3 $O_2$ / m2 - day - atmosphere.

Preferably, the optional inner gas barrier layer (b) comprises at least one gas barrier polymer selected among polyvinylidene chloride polymers (PVDC), vinylidene chloride/ methyl acrylate copolymers, ethylene-vinyl alcohol copolymers (EVOH), polyamides, acrylonitrile-based copolymers, polyesters and blends thereof, more preferably selected among polyvinylidene chloride polymers (PVDC) and vinylidene chloride/ methyl acrylate copolymers or their blends.

Preferably, the optional inner gas barrier layer (b) comprises at least 80%, 90% 95% of one or more of the gas barrier polymers listed above.

The term "PVDC" includes polyvinylidene chloride as well as copolymers of vinylidene chloride and at least one mono-ethylenically unsaturated monomer copolymerizable with vinylidene chloride. The mono-ethylenically unsaturated monomer may be present from 2 to 40 wt %, or 4 to 35 wt %, of the resultant PVDC. Examples of the mono-ethylenically unsaturated monomer include vinyl chloride, vinyl acetate, vinyl propionate, alkyl acrylates, alkyl methacrylates, acrylic acid, methacrylic acid, and acrylonitrile. PVDC also includes copolymers and terpolymers such as polymers of vinyl chloride with one or more $C_{1-5}$ alkyl acrylates or methacrylates, such as methyl acrylate, ethyl acrylate or methyl methacrylate, as the comonomers. Furthermore, two different PVDC polymers can be blended, a PVDC-VC copolymer can be blended with a PVDC-MA copolymer. Blends of PVDC and polycaprolactone (e.g., examples 1-7 of EP2064056 B1) are suited for the packaging of respiring food products, such as cheese. The PVDC may contain suitable additives as known in the art, i.e., stabilizers, antioxidants, plasticizers, hydrochloric acid scavengers, etc. that may be added for processing reasons or/and to control the gas-barrier properties of the resin. Suitable PVDC polymers include Ixan® PV910 polyvinylidene chloride from Solvin and Saran® 806 polyvinylidene chloride from The Dow Chemical Company.

Preferably, the anti-odour film of the present invention comprises at least an inner gas barrier layer (b), more preferably an inner gas barrier layer (b) comprising polyvinylidene chloride polymers (PVDC), vinylidene chloridel methyl acrylate copolymers or their blends.

The second outer layer (c) of the films of the present invention provides for strength (anti-abuse) and heat-resistance during the sealing step.

It comprises one or more polymers having melting point preferably higher than the melting point of polymers in the heat sealant layer (a). The second outer layer may have any composition suitable for the intended application.

For instance, the second outer layer (c) may comprise one or more polymer(s) selected from the group consisting of polyolefins and their copolymers, polyamides, polyesters or styrene-based polymers.

In one embodiment, the second outer layer (c) may comprise at least a polyolefin or an ethylene/alpha-olefin copolymer or their blends, preferably a blend of homogeneous ethylene/alpha-olefin copolymer and a linear low-density polyethylene (LLDPE).

The second outer layer (c) may have the same or a different composition in respect of the first outer heat sealable layer (a).

Preferably, the second outer layer (c) comprises a two-component polymer blend providing improved resistance to ink abrasion that comprises a propylene-based polymer and an olefin block copolymer (OBC), as described in WO2014184256 Preferably, the second outer layer comprises the propylene-based copolymer in an amount of from 75 to 95 wt % and the OBC in an amount of from 5 to 25 wt % based on layer weight, optionally further in combination with a polysiloxane in an amount of from 5 to 20 wt %.

In another embodiment, the second outer layer (c) preferably comprises a blend of a propylene/ethylene copolymer, and/or a propylene-ethylene/butene terpolymer, in an amount of from 75 to 95 wt %, with the OBC in an amount of from 5 to 25 wt % (based on layer weight, optionally further in combination with a polysiloxane in an amount of from 5 to 20 wt % based on layer weight.

Propylene-based polymers include propylene/ethylene copolymer (PEC), propylene/ethylene/butene terpolymer (PEB), and propylene homopolymer (PP).

The second outer layer may have a thickness of from 1 to 20 microns, or from 1 to 15 microns, or from 1 to 10 microns.

The inner anti-odour layer (d) of the film of the present invention comprises at least an anti-odour compound selected among metals (0), metal ionomers and their blends, in which said metal is selected among magnesium, calcium, copper, iron, cerium, zinc and lithium, and zinc salts of organic acids of formula I. The content by weight of metal ionomers in the anti-odour layer(s) (d) is at most 90%.

Preferably, the metal is zinc.

Preferably, the anti-odour compound is selected among zinc salts of organic acids of formula I and zinc ionomers.

Preferably the anti-odour compound is selected among metals (0) and their blends, or among zinc salts of organic acids of formula I, preferably is zinc ricinoleate.

Zinc salts of organic acids are compounds represented by formula I

$$(RCOO)_2Zn \qquad I$$

in which R represents a linear or branched, saturated or unsaturated $C_3$-$C_{21}$ alkyl group optionally substituted with at least an OH group.

Preferably, R is a linear or branched, saturated or unsaturated $C_7$-$C_{17}$, more preferably $C_7$-$C_9$ or $C_{13}$-$C_{17}$ or $C_{15}$-$C_{17}$ alkyl group, optionally substituted with at least an OH group.

Preferably, zinc salts are selected among zinc acetate, zinc laurate, zinc stearate and zinc ricinoleate.

Zinc ricinoleate is particularly preferred. In addition to the very good anti-odour properties, it has very little effect on the optical properties of polymer layers.

Zinc ricinoleate is commercially available for instance from Silvergate as LDPE masterbatch. It ensures a good thermal stability during extrusion processes and is particularly suitable for use in combination with polyolefins.

In another embodiment, the anti-odour compound is selected among metal ionomers, preferably among lithium and zinc ionomers, more preferably among zinc ionomers.

Ionomer refers to a resin based on metal salts of copolymers of ethylene and a vinyl monomer bearing an acid or an ester group (unsaturated organic acid or ester), such as methacrylic acid. Ionomers are cross-linked polymers in which the linkages are ionic (i.e., interchain ionic bonding) as well as covalent bonds. Ionomer resins have positively and negatively charged groups, which are not associated with each other, providing the resin with a polar character.

Unsaturated organic acids include acrylic acid and methacrylic acid. Unsaturated organic ester includes methacrylate and isobutyl acrylate. Ionomer resin can include a mixture of two or more ethylene/ unsaturated organic acid or ester copolymers.

Suitable commercial zinc ionomers include for instance CLARIX® ZINC SERIES by A. Schulman and DuPont Surlyn in particular DuPont™ Surlyn® 1650.

Preferably, the anti-odour compound is selected among metal ionomers and their admixtures with a zinc salt of organic acids of formula I.

In the inner anti-odour layer (d), the anti-odour compound may be blended with one or more polymers or may be used "neat", i.e. without the addition of significant amounts of other materials in the same layer (d) as in the case of metal ionomers.

In case the anti-odour compound is a metal (0), a zinc salt of organic adds of formula I or their blends, the content by weight of said compound(s) in the anti-odour layer(s) (d) is preferably at least 0.1%, 0.2%, 0.3%, 0.4%, 0.5% in respect of said inner anti-odour layer(s) (d) weight (specific concentration). In case the anti-odour compound is a metal (0), a zinc salt of organic acids of formula I or their blends, the content by weight of said compound(s) in the anti-odour layer(s) (d) is preferably at most 10%, 8%, 5%, 3%, 1% in respect of said inner anti-odour layer(s) (d) weight.

In case the anti-odour compound is a metal (0), a zinc salt of organic acids of formula I or their blends, the content by weight of said compound(s) in the anti-odour layer(s) (d) is preferably from 0.1% to 15%, 0.1 % to 10%, 0.2% to 8%, 0.2% to 2% 0.3% to 1 %, border values included in respect of said inner anti-odour layer (d) weight.

Preferably, in case the anti-odour compound is a metal (0), or zinc salt of organic acids of formula I, the content by weight of metal, in the anti-odour layer(s) (d) is from 0.01% to 2%, preferably from 0.02% to 1%, more preferably from 0.02% to 0.8%, even more preferably from 0.07% to 0.7% in respect of layer(s) (d) weight

Preferably, in case the anti-odour compound is a metal (0), or zinc salt of organic acids of formula I the content by weight of metal, in the anti-odour layer(s) (d) is at least 0.01%, 0.02%. 0.07% or 0.10%.

Preferably, in case the anti-odour compound is a metal (0), or zinc salt of organic acids of formula I the content by weight of metal, in the anti-odour layer(s) (d) is at most 2%, 1%, 0.6% or 0.5%.

Preferably, If the metal in said metal (0) is zinc, the above values, ranges and preferred sub-ranges apply as well.

The thickness of the one or more anti-odour layer(s) (d) (summed up) in respect of the total thickness of the film may range from 1% and 50%, preferably from 5 to 45%, more preferably from 15% to 30%. The thickness of the one or more anti-odour layer(s) (d) (summed up) in respect of the total thickness of the film preferably is lower than 50%, 40%, 30%, 20%, 15% or 12%.

The anti-odour layer(s) (d) may have a total thickness from 1 to 50 microns, 1 to 30 microns, preferably from 3 to 20 microns, more preferably from 4 to 15 microns.

The Applicant has surprisingly found that the films of the invention achieve much better anti-odour performances when high amount of metal anti-odour compounds are contained in thin inner layer(s) (d). In other words, being equal the total amount of anti-odour compound in the film, the anti-odour performance is significantly improved if said anti-odour compound is included in thin layers, preferably in a thin single layer, rather than being dispersed in a thicker layer or in more than one layer. Accordingly, the anti-odour layer(s) (d) preferably has a total thickness lower than 50, than 20, preferably lower than 15, lower than 10, more preferably lower than 7, even more preferably lower than 5 microns.

The thickness of the one or more anti-odour layer(s) (d) (summed up) is generally lower than 80%, preferably lower than 60%, more preferably lower than 50%, 40%, 30%, even more preferably lower than 25% or 20% in respect of the total thickness of the layers of the film from the optional barrier layer (b) to the outer sealant layer (a) (excluded the optional barrier layer (b) and included the outer sealant layer (a). Preferably, it is between 5% and 80%, 5% and 60%, 10% and 50% or 15% and 40%.

In a preferred embodiment the inner anti-odour layer (d) of the film of the present invention comprises: at least an anti-odour compound selected among zinc (0), zinc salts of organic acids of formula I and their blends, wherein the content by weight of zinc, in the anti-odour layer (d) is from 0.01% to 2%, preferably from 0.02% to 1%, more preferably from 0.02% to 0.8%, even more preferably from 0.07% to 0.7% in respect of layer (d) weight and the anti-odour layer (d) has a thickness lower than 20, preferably lower than 15, lower than 10, more preferably lower than 7, even more preferably lower than 5 microns.

In a preferred embodiment, the inner anti-odour layer (d) of the film of the present invention comprises: at least an anti-odour compound selected among zinc (0), zinc salts of organic acids of formula I and their blends,

wherein the content by weight of zinc, in the anti-odour layer (d) is from 0.01 % to 2%, preferably from 0.02% to 1%, more preferably from 0.02% to 0.8%, even more preferably from 0.07% to 0.7% in respect of layer (d) weight, and the anti-odour layer (d) has a thickness lower than 20, preferably lower than 15, lower than 10, more preferably lower than 7, even more preferably lower than 5 microns, and

the anti-odour layer (d) comprises a polyolefin blend selected among blends a) to i) reported below. In case the anti-odour compound is a metal ionomer, preferably the percentage by weight of said metal ionomer, in the anti-odour layer(s) (d) is at least of 0.5%, 1%, 2%, 4%, 6%, 8%,10%, 20%, or 40% in respect of said layer(s) (d) weight.

Preferably, the percentage by weight of metal ionomer, in the anti-odour layer(s) (d) is at most 80%, 70%, 60%, preferably at most 50%, 40%,30%, 20% or 10% in respect of said layer(s) weight. Preferably, the percentage by weight of metal ionomer, in the anti-odour layer(s) (d) is from 2% to 80%, 4% to 60%, 10% to 50%, 20% to 40%, border values included.

Preferably, the content by weight of the metal, in the ionomer is from 5% to 0.5%, preferably is from 0.8 to 1.1%.

Preferably, in case the anti-odour compound is a metal ionomer, the content by weight of metal, in the anti-odour layer(s) (d) is from 0.001% to 1%, preferably from 0.02% to 0.5%, more preferably from 0.04% to 0.4%, in respect of layer(s) (d) weight.

Preferably, in case the anti-odour compound is a metal ionomer, the content by weight of metal, in the anti-odour layer(s) (d) is at least 0.02%, 0.04%, 0.08%, 0.10%, 0.20% or 0.30% in respect of layer(s) (d) weight

Preferably, in case the anti-odour compound is a metal ionomer, the content by weight of metal, in the anti-odour layer(s) (d) is at most 1%, 0.5%, 0.4%, 0.2% or 0.1% in respect of layer(s) (d) weight Preferably, the metal in said metal ionomer is zinc and the above values, ranges and preferred sub-ranges apply to zinc as well.

The thickness of the one or more anti-odour layer(s) (d) (summed up) in respect of the total thickness of the film may range from 1% and 50%, preferably from 5 to 45%, more preferably from 15% to 30%. The thickness of the one or more anti-odour layer(s) (d) (summed up) in respect of the total thickness of the film preferably is lower than 50%, 40%, 30%, 20%, 15% or 12%.

The anti-odour layer(s) (d) may have a thickness from 1 to 30 microns, preferably from 3 to 20 microns, more preferably from 4 to 15 microns.

The at least an anti-odour layer(s) (d) preferably has a thickness lower than 20, preferably lower than 15, lower than 10, more preferably lower than 7, even more preferably lower than 5 microns.

The thickness of the one or more anti-odour layer(s) (d) (summed up) in respect of the total thickness of the layers of the film from the optional barrier layer (b) to the outer sealant layer (a) (excluded the optional barrier layer (b) and included the outer sealant layer (a)) is generally lower than 80%, preferably lower than 60%, more preferably lower than 50%, 40%, 30%, even more preferably lower than 25% or 20%. Preferably, it is between 5% and 80%, 5% and 60%, 10% and 50%, 15% and 40%. In a preferred embodiment, the inner anti-odour layer(s) (d) of the film of the present invention comprises: at least a metal ionomer, wherein said metal is zinc, and

the content by weight of zinc ionomers in the anti-odour layer(s) (d) is at least 0.5%, 1%, 2%, 4%, 6%, 8%,10%, 20%, or 40% and at most 90%, 80%, 70%, 60%, preferably at most 50%, 40%,30%, 20% or 10% in respect of layer(s) (d) weight and

the anti-odour layer(s) (d) has a thickness lower than 20, preferably lower than 15, lower than 10, more preferably lower than 7, even more preferably lower than 5 microns.

In a preferred embodiment, the inner anti-odour layer(s) (d) of the film of the present invention comprises at least a metal ionomer, wherein said metal is zinc, and

the content by weight of said zinc ionomer in the anti-odour layer(s) (d) is from 2% to 80%, 4% to 60%, 10% to 50%, 20% to 40% in respect of layer(s) (d) weight and

the anti-odour layer(s) (d) has a thickness lower than 20, preferably lower than 15, lower than 10, more preferably lower than 7, even more preferably lower than 5 microns.

In a preferred embodiment, the inner anti-odour layer(s) (d) of the film of the present invention comprises at least a metal ionomer, wherein said metal is zinc, and

the content by weight of metal, in the anti-odour layer(s) (d) is from 0.001% to 1%, preferably from 0.02% to 0.5%, more preferably from 0.04% to 0.4%, in respect of layer(s) (d) weight and the anti-odour layer(s) (d) has a thickness lower than 20, preferably lower than 15, lower than 10, more preferably lower than 7, even more preferably lower than 5 microns.

Preferably, in the previous three preferred embodiments, the anti-odour layer(s) (d) comprises a polyolefin blend selected among blends a) to i) reported below.

In case the anti-odour compound is a blend of a metal (0) and/or a metal ionomer, in which the metal is preferably zinc, and/or a zinc salt of organic acids of formula I, the preferences stated above for the total weight of anti-odour compounds and the total weight of metals vs the total weight of layer(s) (d) apply as well.

The anti-odour layer may optionally comprise one or more polymers conventionally used in manufacturing packaging films, provided that said one or more polymers are compatible with the anti-odour compound and/or the masterbatch composition in which the anti-odour compound is incorporated (as intended by the skilled in the art i.e. at least they do not react and they are miscible). Said polymers may be, preferably, selected among polyolefins, polyolefin derivatives (such as for instance ionomers, acrylates, EVA), polyesters, polyamides or their blends.

Preferably, the inner anti-odour layer (d) in addition to the anti-odour compound(s) may comprise a polyolefin or polyolefin derivatives and their blends.

Preferably said polyolefins or modified polyolefins are selected among ethylene homopolymer or copolymers, such as LDPE or VLDPE, ethylene/alpha olefin copolymer, propylene polymer or copolymer, such as ethylene/propylene copolymer, vinyl acetate copolymers, EVA, ethylene-(meth)acrylate copolymers, ionomers any of the above optionally modified with carboxylic or preferably anhydride functionalities and their blends.

In case the anti-odour compound is a metal (0) or a zinc salt of organic acids of formula I, said polyolefins, modified polyolefins and their blends amount to at least 70%, 80%, 90%, 95%, 98% or 99% by weight in respect of layer(s) (d) weight.

In case the anti-odour compound is a metal ionomer said polyolefins, modified polyolefins and their blends preferably amount to at least 50%, 60%, 70%, 80%, 90%, 95%, 98%, and 99% by weight. Preferred polyolefin blends for the inner anti-odour layer(s) (d) comprise:

a) from 45% to 70% of VLDPE and from 25% to 50% of EMAA; or

b) from 5% to 50 % of VLDPE, from 10% to 50% of EMAA and from 35% to 80 % of LLDPE or

c) from 90% to 30 % of ethylene homopolymer and/or ethylene/alpha olefin copolymer and from 10% to 70 % of EVA,

in respect of layer(s) (d) weight.

More preferred polyolefin blends for the inner anti-odour layer(s) (d) comprise:

d) from 50% to 65 % of VLDPE and from 30% to 45% of EMAA; or

e) 7% to 40% of VLDPE, from 15% to 40% of EMAA and from 40% to 70 % of LLDPE: or

f) from 80% to 50 % of ethylene homopolymer and/or ethylene/alpha olefin copolymer and from 20% to 50 % of EVA,

in respect of layer(s) (d) weight.

Even more preferred polyolefin blends for the inner anti-odour layer(s) (d) comprise:

g) from 55 to 60 % of VLDPE and from 35 to 40% of EMAA; or

h) from 10 to 30 % of VLDPE, from 25 to 35% of EMAA and from 45 to 55 % of LLDPE; or

i) from 75 to 65 % of ethylene homopolymer and/or ethylene/alpha olefin copolymer and from 25 to 35 % of EVA,

in respect of layer(s) (d) weight.

Preferably, the anti-odour layer(s) (d) of the present films comprises zinc ricinoleate or zinc ionomer and a polyolefin blend selected among the blends a) to i) reported above.

Preferred anti-odour layer(s) (d) compositions are the following

I. from 0.1% to 10% of an anti-odour compound selected among metals (0), in which preferably said metal is zinc, and zinc salts of organic acids of formula I, more preferably in which said anti-odour compound is zinc ricinoleate, and

from 45 to 70 % of VLDPE and
from 25 to 50% of EMAA
in respect of layer(s) (d) weight.

II. from 0.1% to 10% of an anti-odour compound selected among metals (0), in which preferably said metal is zinc, and zinc salts of organic acids of formula I, more preferably in which said anti-odour compound is zinc ricinoleate, and from 5% to 50 % of VLDPE, from 10% to 50% of EMAA and from 35% to 80 % of LLDPE in respect of layer(s) (d) weight.

III. at least an anti-odour compound selected among metals (0), in which preferably said metal is zinc, and zinc salts of organic acids of formula I, more preferably in which said anti-odour compound is zinc ricinoleate, in an amount so that the content by weight of metal, in the anti-odour layer(s) (d) is from 0.01% to 2%, preferably from 0.02% to 1%, more preferably from 0.02% to 0.8%, even more preferably from 0.07% to 0.7%, and

from 45 to 70 % of VLDPE and
from 25 to 50% of EMAA
in respect of layer(s) (d) weight.

IV. at least an anti-odour compound selected among metals (0), in which preferably said metal is zinc, and zinc salts of organic acids of formula I, more preferably in which said anti-odour compound is zinc ricinoleate, in an amount so that the content by weight of metal, in the anti-odour layer(s) (d) is from 0.01% to 2%, preferably from 0.02% to 1%, more preferably from 0.02% to 0.8%, even more preferably from 0.07% to 0.7%, and

from 5% to 50 % of VLDPE, from 10% to 50% of EMAA and from 35% to 80 % of LLDP E in respect of layer(s) (d) weight.

V. at least an anti-odour compound selected among metals (0), in which preferably said metal is zinc, and zinc salts of organic acids of formula I, more preferably in which said anti-odour compound is zinc ricinoleate, in an amount so that the content by weight of metal, in the anti-odour layers) (d) is from 0.01% to 2%, preferably from 0.02% to 1%, more preferably from 0.02% to 0.8%, even more preferably from 0.07% to 0.7%, and

from 70 to 98% of EVA,
in respect of layer(s) (d) weight.

VI. at least an anti-odour compound selected among metals (0), in which preferably said metal is zinc, and zinc salts of organic acids of formula I, more preferably in which said anti-odour compound is zinc ricinoleate, in an amount so that the content by weight of metal, in the anti-odour layer(s) (d) is from 0.01% to 2%, preferably from 0.02% to 1%, more preferably from 0.02% to 0.8%, even more preferably from 0.07% to 0.7%, and

from 90% to 30 % of ethylene homopolymer and/or ethylene/alpha olefin copolymer and from 10% to 70 % of EVA,
in respect of layer(s) (d) weight.

Most preferably, the anti-odour layer(s) (d) comprises one of the above compositions I) to VI) and has a thickness lower than 15 micron, preferably than 10 microns, more preferably lower than 5 microns. Preferably, the anti-odour layer(s) (d) consists of the above compositions I) to VI).

More preferably, the anti-odour layer(s) (d) consists of the above blends I) to VI) and has a thickness lower than 15 micron, preferably than 10 microns, more preferably lower than 5 microns.

In case the anti-odour compound is a metal ionomer, the inner anti-odour layer(s) (d) preferably comprises at least 0.5%, 1%, 2%, more preferably 4%, 6%, 8%,10%, 20%, 40% or more of said metal ionomer, the complement to 100% being one or more polyolefins or modified polyolefins as listed above.

In case the anti-odour compound is a metal ionomer, the inner anti-odour layer(s) (d) comprises at most 90%, 80%, 70%, 50%, 40%, 30%, 20%, 10% of said metal ionomer, the complement to 100% being one or more polyolefins or modified polyolefins as listed above.

Preferred anti-odour layer(s) (d) compositions are the following:

VII. from 0.001% to 1%, preferably from 0.02% to 0.5%, more preferably from 0.04% to 0.4%,of a metal ionomer, preferably a zinc ionomer, and

from 45 to 70 % of VLDPE and
from 25 to 50% of EMAA
in respect of layer(s) (d) weight.

VIII. from 0.001% to 1%, preferably from 0.02% to 0.5%, more preferably from 0.04% to 0.4%,of a metal ionomer, preferably a zinc ionomer, and
from 5% to 50 % of VLDPE, from 10% to 50% of EMAA and from 35% to 80 % of LLDPE in respect of layer(s) (d) weight.

IX. from 0.001% to 1%, preferably from 0.02% to 0.5%, more preferably from 0.04% to 0.4%,of a metal ionomer, preferably a zinc ionomer, and ,

from 50 to 99% of EVA
in respect of layer(s) (d) weight.

X. from 0.001 % to 1%, preferably from 0.02% to 0.5%, more preferably from 0.04% to 0.4%,of a metal ionomer, preferably a zinc ionomer, and ,

from 90% to 30 % of ethylene homopolymer and/or ethylene/alpha olefin copolymer and from 10% to 70 % of EVA,
in respect of layer(s) (d) weight.

Most preferably, the anti-odour layer(s) (d) comprises one of the above compositions VII) to X) and has a thickness lower than 15 micron, preferably lower than 10 microns, more preferably lower than 5 microns.

Preferably, the anti-odour layer(s) (d) consists of the above compositions VII) to X).

More preferably, the anti-odour layer(s) (d) consists of the above compositions VII) to X) and has a thickness lower than 15 micron, preferably than 10 microns, more preferably lower than 5 microns. The anti-odour compound may be incorporated into the inner anti-odour layer(s) (d) in their pure state or may be previously compounded into a suitable polymer or admixture of polymers in the form of master-batches.

Preferably, the master-batches are based on polyolefins and/or modified polyolefins, more preferably on ethylene homo or copolymers. In alternative, ionomers or their admixtures with polyolefin or other suitable compatible polymers may be used.

The film of the invention comprises at least one inner anti-odour layer (d) placed between the sealant layer (a) and the optional barrier layer (b).

Preferably, the film of the invention comprises a single inner anti-odour layer (d).

However, the film of the invention may comprise two or more inner anti-odour layers (d), all of them placed between the sealant layer (a) and the optional barrier layer (b).

In case of more than one inner anti-odour layer (d), each layer may have the same or a different composition.

In case of more than one inner anti-odour layer (d), the composition of each layer (d) may be as previously defined.

Preferably, in case of more than one inner anti-odour layer (d), they may be adjacent or separated by internal layer(s) interposed in between. Preferably, they are adjacent.

In case the film of the invention comprises more than one inner anti-odour layer (d), the total amount of metal, preferably of zinc, in respect of the total weight of the inner anti-odour layers (d) (summed up) is preferably from 0.01% to 2%, preferably from 0.02% to 1%, more preferably from 0.02% to 0.8%, even more preferably from 0.07% to 0.7%.

In the film of the invention other inner layers may be present at need, for instance tie layers, bulk layers, vapour barrier layers, gas barrier layers or others, provided that possible additional gas barrier layers are not interposed between the outer sealant layer (a) and the one or more inner anti-odour layer(s) (d). In fact, interposed gas barrier layers (b) would block odour diffusion from the packaged food to the inner anti-odour layer(s) (d), thus resulting in no or negligible anti-odour effect. Preferably, no more than three, more preferably no more than two, even more preferably no more than one gas permeable layer(s) are interposed between the outer sealant layer (a) and the (outermost of) the inner anti-odour layer(s) (d).

Preferably, in one embodiment, one gas permeable layer is interposed between the outer sealant layer (a) and the (outermost of) the inner anti-odour layer(s) (d), namely the outer sealant layer (a) does not directly adhere to the (outermost of) the inner anti-odour layer(s) (d).

Preferably, in another embodiment, no layer is interposed between the outer sealant layer (a) and the (outermost of) the inner anti-odour layer(s) (d), namely the outer sealant layer (a) directly adheres to the (outermost of) the inner anti-odour layer(s) (d).

Preferably, the film of the invention comprises one inner anti-odour layer (d). Preferably, the inner anti-odour layer (d) is the second or the third inner layer of the film (counting from the outer sealant layer (a)), more preferably the third inner layer.

Preferably, the film of the invention comprises two or three inner anti-odour layers (d), more preferably two. Preferably, the two inner anti-odour layers (d), are the second and the third layers (counting from the outer sealant layer (a)).

The anti-odour multilayer film of the present invention may comprise from 4 to 50 layers or from 4 to 36 layers or for 4 to 12 layers or from 4 to 10 layers.

Preferably it comprises 4 or 5 or 6 or 7 or 8 or 9 layers, more preferably 4 or 6 layers.

Preferably the number of layers from the outermost optional barrier layer (b) (excluded) to the outer sealant layer (a) (included) ranges from 2 to 6, preferably from 2 to 4, even more preferably from 2 to 3.

The anti-odour multilayer film of the present invention may have a total thickness of up to 500 microns or may have a total thickness of from 10 to 150 microns, preferably from 20 to 60 microns or from 30 to 50 microns, depending on the applications.

The anti-odour multilayer film of the present invention preferably have a total thickness lower than 100 microns, preferably lower than 50 microns, more preferably lower than 40 microns.

Preferably, in case of films for VSP applications, the total thickness of the film when used as top film may range from 50 to 180 microns, preferably from 70 to 150, more preferably from 90 to 130, even more preferably from 100 to 125 microns. In case the present film is used as a bottom film, the thickness may be higher than 180 microns, for instance up to 400 or 500 microns.

One or more layers of the anti-odour multilayer film may optionally contain one or more additives, such as slip and anti- block agents, e.g., talc, wax, silica, antioxidants, stabilizers, plasticizers, fillers, pigments and dyes, cross-linking inhibitors, cross-linking enhancers, UV absorbers, odour absorbers, oxygen scavengers, antistatic agents, anti-fog agents or compositions, and the like additives known to those skilled in the art of packaging films.

The anti-odour multilayer film of the present invention is preferably a coextruded film.

The anti-odour multilayer film according to the present invention may be non-oriented, oriented and heat-set (not heat-shrinkable) or oriented and heat-shrinkable, depending on the desired packaging application.

Preferably, the film of the invention is oriented, more preferably biaxially oriented.

Preferably, the film of the invention is oriented and heat-shrinkable.

Preferably, the film of the invention exhibits a percentage of free shrink at 85°C (ASTM D2732) of at least 5% in at least one direction (MD and/or TD) and with a total (MD+TD) free shrink at 85°C of at least 10%,, more preferably a total free shrink in both LD and TD of at least 15%, or 20% or 30%. For VSP applications, the present film is not heat-shrinkable, preferably with a free-shrink at 85°C (ASTM D2732) lower than 5% in at least one direction (MD and/or TD). Preferably, the film is not oriented and, preferably, it is cross-linked.

Manufacture of the films

The anti-odour multilayer films of the invention can be made using conventional extrusion, coextrusion, coating and/or lamination processes. Likewise, conventional manufacturing processes can be used to make a pouch, a bag, or other flexible containers or packaging articles from the film.

Preferably, the anti-odour multilayer film may be manufactured by co-extrusion or extrusion coating, using either a flat or a circular film die that allows shaping the polymer melt into a flat film or a film tubing.

Preferably, the anti-odour multilayer film of the invention when oriented can be made using a trapped-bubble process known for the manufacture of heat-shrinkable films for food packaging.

According to said process, the multilayer film is co-extruded through a round die to obtain a tube of molten polymer which is quenched immediately after extrusion without being expanded, optionally cross-linked, then heated to a temperature which is above the Tg of all the resins employed and below the melting temperature of at least one of the resins employed, typically by passing it through a hot water bath or heating it with an IR oven or with hot air, and expanded, still at this temperature by internal air pressure to get the transversal orientation and by a differential speed of the pinch rolls which hold the thus obtained "trapped bubble" to provide the longitudinal orientation. The film is then rapidly cooled to somehow freeze the molecules of the film in their oriented state and wound.

Furthermore, in some instances it may be desirable to submit the oriented structure to a controlled heating-cooling treatment (so-called annealing) that is aimed at having a better control on low temperature dimensional stability of the heat-shrinkable film.

In case of oriented films, while orientation is typically carried out in both directions, mono-oriented films or preferentially oriented films can be obtained by avoiding or controlling transversal or longitudinal orientation

Typical solid state orientation ratios for the films of the present invention can be from 2:1 to 6:1 in each direction (MD and TD), or from 3:1 to 5:1 in each direction, or from 3.5:1 to 4.5:1 in each direction

Otherwise, the anti-odour multilayer film according to the present invention may be obtained by flat coextrusion through a slot die, followed by optional orientation by heating to its softening temperature (but below its melt temperature) and stretching in the solid state by a simultaneous or a sequential tenterframe process. Orientation may, optionally, be followed by annealing.

In case of films for VSP applications, they may be manufactured by any suitable co-extrusion process, either through a flat or a round extrusion dies, preferably by round cast or by hot blown extrusion techniques. Suitable round or flat coextrusion lines for coextruding the films of the invention are well known in the art. Preferably, for use as the top web of an anti-odour VSP package, the film of the present invention is substantially non oriented.

Optionally, during the manufacture of the anti-odour multilayer film, the extrudate may be cross-linked, either chemically or by irradiation. Preferably, films for VSP applications are cross-linked. The extrudate can be subjected to a radiation dosage of high-energy electrons, preferably using an electron accelerator, with the dosage level being determined by standard dosimetry methods. Depending on the desired characteristics, this irradiation dosage can be from 20 to 200 kiloGrays (kGy), or from 30 to 150 kGy, or from 60 to 70 kGy. Other accelerators such as a Van der Graff generator or resonating transformer may be used. The radiation is not limited to electrons from an accelerator since any ionizing radiation may be used.

Irradiation is preferably performed prior to optional orientation, and it is carried out either on the overall co-extruded or extrusion-coated tape, or preferably, on the primary extruded tape before extrusion coating. Irradiation could however be performed also after optional orientation.

Depending on the number of layers to be present in the film, it may be desirable to split the extrusion by first extruding a substrate, which is irradiated, and thereafter extrusion-coating the irradiated substrate, optionally followed by solid-state orientation of the irradiated, coated extrudate.

If extrusion-coating is employed, all of the coating layers can be applied as a single, simultaneous extrusion coating of the quenched substrate, or the coating step can be repeated as many times as the layers to be coated onto the quenched substrate.

The extrusion-coating step is desirable when making a film which is only partially crosslinked.

In an anti-odour barrier film comprising PVdC, it is desirable to avoid degradation and/or discoloration of PVdC layer by avoiding subjecting PVdC to irradiation. This is accomplished by performing irradiation after extrusion of substrate layers, which do not include the layer comprising PVdC, with PVdC layer being added by extrusion coating after the irradiation of the substrate.

As described above, the anti-odour multilayer film of the invention may be produced as a seamless tubing or as a flat film.

A seamless tubing can be converted into other packaging articles such as end-seal bags, side-seal bags, casings, etc while retaining the seamless tubing.

Otherwise, the seamless tubing may be converted to a flat film by slitting before or after the tubing is wound onto rolls for further processing.

A second object of the present invention is an article for packaging made from the film of the first object of the invention in the form of a seamless tube, a bag, a sachet, a pouch or a pad.

A bag, a sachet, a pouch, or others are obtainable by sealing the film of the first object to itself.

The sealing of the film of the present invention to itself can be accomplished in a fin seal mode (a first region of the heat sealant layer heat sealed to a second region of the heat sealant layer), or a lap seal mode (region of the heat sealant layer heat sealed to a region of the second outer layer).

The anti-odour multilayer film of the present invention can be supplied in rolls and converted to pouches on a conventional horizontal packaging machine such as for example Flow-Vac® Flow Wrapper (HFFS) supplied by Ulma. In this process, a product is packaged in a pouch, which is shrunk around the product, with the pouch having three-seals: two transverse heat seals and one longitudinal heat seal.

Pouches can also be formed using a Vertical Form Fill Seal (VFFS) packaging system. VFFS process is known to those skilled in the art and is described in, for example, US4589247. In a VFFS process, a product is introduced through a central, vertical fill tube to a continuously supplied flat film having a terminal region formed into a backseamed tubing by heat sealing longitudinally with a fin or lap seal, followed by heat sealing transversely across the end of the tubing form a package bottom. The product is directed downwardly into the resulting pouch, which is thereafter closed by making a transverse heat seal across the backseamed tubing at a location above the product inside the pouch, followed by severing the pouch from the tubular film above.

In both VFFS and HFFS, the transverse sealer may be provided with means to simultaneously seal the top of the leading pouch and the bottom of the following pouch, as well as to sever the two seals from one another, in order to separate the leading package from the front sealed tubing. Alternatively, in the VFFS and HFFS processes, the transverse seal may be operated to sever the leading package from the following tubular portion while transversely sealing only the leading end of the following tubular portion, thus creating the sealed bottom of the next leading pouch. In this way, each pouch-containing product has only a longitudinal seal and a transverse seal.

It can then be forwarded to a vacuum chamber and vacuumized before the second transverse seal is made to close the package. In this arrangement, the preferably solid-state oriented heat-shrinkable thermoplastic film of the present invention is employed as the packaging material, and the vacuumized package is then shrunk to achieve the desired packaged product. In both VFFS and HFFS processes, the transverse seals are fin seals, but the longitudinal seal can be either a fin seal or a lap seal.

In one embodiment, the article for packaging is a lay-flat pouch made by heat sealing two flat films to one another, the pouch having an open top, a first side seal, a second side seal and a bottom seal. The anti-odour multilayer film of the present invention can be used to make a, preferably heat-shrinkable, bag, which is used to package a product.

The, preferably heat-shrinkable, flexible article for packaging can be an end-seal bag (ES) or a side (or transverse TS) seal bag.

In one embodiment, the flexible container is a lay-flat, end-seal bag made from a seamless tubing, the end-seal bag having an open top, first and second folded side edges, and an end seal across a bottom of the bag. An ES bag (end-seal bag), is obtainable from a flattened tubing of thermoplastic material by transversely sealing and severing the bottom end of the bag

In one embodiment, the flexible container is a lay-flat, side-seal bag made from a seamless tubing, the side-seal bag having an open top, a folded bottom edge, and first and second side seals.

A TS bag (transverse seal bag), is obtainable by folding longitudinally a flat film, sealing, and severing it transversely. In both the ES and TS bags currently available on the market, the seals are fin seals i. e. seals where one surface of the packaging film is sealed to itself.

The article for packaging according to the present invention may be an adsorbent or soaked pad comprising the present anti-odour film.

It is a third object of the present invention a package comprising an article for packaging in the form of a seamless tube, a bag, a sachet, a pouch, or a pad and a product, preferably a food product, packaged therein or therewith.

Preferably, the article for packaging is a heat-shrinkable bag, a sachet or a pouch.

Preferably the product is loaded into the heat-shrinkable article for packaging , with atmosphere thereafter being evacuated from the article for packaging, with the open end of the article for packaging then being by heat-sealing or by applying a clip, e.g. of metal. This process is advantageously carried out within a vacuum chamber where the evacuation and application of the clip or heat seal is done automatically. After the article for packaging is removed from the chamber it is heat shrunk by applying heat. Shrinking of the film can be carried out by immersing the filled article for packaging into a hot water bath or conveying it through a hot water shower or a hot air tunnel, or by infrared radiation. The heat treatment can produce a tight wrapping that will closely conform to the contour of the product An anti-odour film of the invention, when heat-shrinkable, can provide complete shrinkage of the article for packaging around the product, so that the article for packaging is not wrinkled, thus offering an attractive package.

The article for packaging may be provided with mechanical properties that allow it to physically survive the process of being filled, evacuated, sealed, closed, heat shrunk, boxed, shipped, unloaded, and stored at the retail supermarket, as well as a stiffness level advantageous for loading the product into the packaging article made from the film.

The packaging article can optionally comprise at least one tear initiator.

In alternative, the article for packaging may be an anti-odour pad, which may be packaged with the product inside the package.

The article for packaging may be printed.

It is a fourth object of the present invention a package comprising a tray, a food product packaged therein and a lidding film sealed along the tray flange and closing said package, in which said film is a film according to the first object

Tray lidded packages in which the lid is made of the present anti-odour film may be manufactured according to a packaging method, which comprises:

(I) providing a tray with heat-sealable flange,

(II) loading said tray with the product to be packaged

(III) applying an optionally heat-shrinkable lid on top of said tray, and

(IV) heat-sealing said lid to the tray flange, optionally with a modified atmosphere between said lid and said tray, providing a package and, optionally

(V) heat shrinking the package simultaneously or subsequently to the sealing step The sealing of the film of the present invention to the tray flange is performed conventionally.

Specific examples of tray lidding machines suitable to heat seal the present films to trays and containers are for instance Multivac 400 and Multivac T550 by Multivac Sep. GmbH, Mondini E380, E390 or E590 or Trave by Mondini Spa, Ross A20 or Ross S45 by Ross-Reiser, Meca-2002 or Meca-2003 by Mecaplastic, the tray lidding machines manufactured by Sealpac, Ulma Taurus and Ulma Scorpius supplied by Ulma Packaging, Ishida QX and the like machines.

It is a fifth object of the present application an anti-odour vacuum skin package (VSP) comprising a top film, a support and a product preferably a food product loaded onto said support, said film being draped over the product and sealed to the surface of the support not covered by the product, wherein said top film and/or said support is a film according to the first object.

Any support or bottom web generally suitable for VSP applications may be used within the package of the present invention, including both in-line thermoformed and off-line pre-made supports.

In a preferred embodiment, the film of the present invention may be used as support, i.e. as thermoformed bottom web, preferably with a total thickness up to 500 microns.

The support may be flexible, rigid or semi-rigid, in the form of a flat sheet or of a shaped tray, bowl-shaped or cup-shaped, may be a solid or foamed polymeric tray.

In case of microwave applications, solid supports comprising a polymer with a relatively high melting point such as polypropylene, polystyrene, polyamide, 1, 4-polymethylpentene or crystallized polyethylene terephthalate (CPET) are preferred.

Solid polypropylene is particularly preferred because of its strength, its ability to support a food product, and its relatively high melting point. Other materials will be more or less desirable for microwave applications depending on their physical characteristics such as those described above.

The support may comprise a bottom web made of a plastic web, optionally adhered or laminated to a non-plastic material.

The bottom web may be a monolayer or multilayer plastic material.

In case of a monolayer bottom web, it may be made for instance of polypropylenes, polyesters, PVC or HDPE.

In case the monolayer bottom web surface is not sealable or adhesible, the adhesion between the top web and the bottom may be provided by tailoring the sealing or adhesion properties of the top web, in particular of top web outer layer.

In addition to, or in alternative to the above, the adhesion may be imparted through suitable treatments of the support surface known in the art such as corona treatment.

The bottom web may be a multilayer web, optionally comprising an inner anti-odor layer(s) (d) according to the present invention.

Preferably, the multilayer bottom web comprises an outer sealable layer to allow a better welding of the top film to the part of the support not covered by the product. Preferably, the seal layer comprises one or more polymers such as polyolefins, like ethylene homo- or co-polymers, propylene homo- or co-polymers, ethylene/vinyl acetate copolymers, ionomers.

The multilayer bottom web, in addition to the sealable layer generally comprises at least one bulk layer for the mechanical properties. Preferably, the bulk layer comprises one or more polymers such as polyethylene, polystyrene, polyester, poly(vinyl chloride (PVC), polypropylene or polyamides.

In a number of applications, the bottom web is required to have gas barrier properties, in particular oxygen barrier properties.

Thus, in addition to a bulk and a heat-sealable layer, bottom web may be provided with a gas barrier layer. The thickness of the gas barrier layer will be typically set in order to provide the support with an oxygen transmission rate lower than 500 $cm^3/m^2$.day.atm, preferably lower than 100, more preferably lower than 10, even more preferably lower than 7, when measured at 23°C and 0 % of relative humidity (evaluated by following the method described in ASTM D-3985 and using an OX-TRAN instrument by Mocon).

In one embodiment, the VSP package comprises at least one anti-odour layer (d) in the top film or in the bottom web or in both.

Additional layers, such as tie layers, to better adhere the gas barrier layer to the adjacent layers, may be present in the bottom web material for the support and are preferably present depending in particular on the specific resins used for the gas barrier layer.

In case of a multilayer structure, part of it can be foamed and part can be cast.

For instance, the bottom web may comprise (from the outermost layer to the innermost food-contact layer) one or more structural layers, typically of a material such as polyethylene, polystyrene, polyester, poly(vinyl chloride), polypropylene, polyamides or cardboard; a gas barrier layer and a heat-sealable layer.

The overall thickness of the support may typically be up to 8 mm, for instance it may be comprised between 0.1 and 7 mm and more preferably between 0.2 and 6 mm.

In a preferred embodiment, the support is made of a flexible web according to the film of invention, more preferably of a flexible web having the same composition of the top web. Preferably, the flexible bottom web have a thickness of from 80 to 400 microns.

In a preferred embodiment, the bottom web consists of a seal layer, an anti-odour layer (d) and a bulk layer only. Preferably, the seal layer is a polyethylene base layer and the bulk layer is a polyester or polypropylene based layer.

In a preferred embodiment, the bottom web consists of a seal layer, an anti-odour layer (d), a barrier layer and a bulk layer only. Preferably, the seal layer is a polyethylene base layer, the barrier layer is an EVOH based layer and the bulk layer is a polyester or polypropylene based layer.

The term "polyesters" refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters incorporated in the bottom web include poly(ethylene 2,6-naphtalate), poly(ethylene terephthalate), and copolyesters obtained by reacting one or more dicarboxylic acids with one or more dihydroxy alcohols, such as PETG which is an amorphous co-polyesters of terephthalic acid with ethylene glycol and 1,4-cyclohexanedimethanol.

The polypropylene polymers used in the present bottom webs or supports include homopolypropylene, copolypropylenes and their blends.

The bottom web comprises a seal layer and optionally one or more other layers. This or these layers may be barrier layers, bulk layers, tie layers, anti-odour layers according to the invention and an outer abuse resistance layer.

The seal layer of this web preferably comprises a polyolefin. More preferably, it may comprise at least one member selected from the group comprising ethylene/alpha olefin copolymer, LLDPE, VLDPE, LDPE, MDPE, EAA, EMAA, EVA, or ionomer.

Advantageously, as the present top web is highly engineered and incorporates most of the relevant functions, including anti-odor functions, in the anti-odour VSP package of the present invention the support may be particularly simple and cheap.

In a preferred embodiment, the support is made of a single sheet of non-plastic material suitably laminated or coated with at least an adhesible layer, preferably a seal layer, in order to improve the adhesion, preferably the welding, between the top web and the support.

In another embodiment, the support comprises a multilayer plastic bottom web adhered to a non-plastic material, such as for instance, a cardboard or aluminum tray.

In such a case, preferably the bottom web does not include a bulk layer, more preferably consists of a seal layer, an anti-odour layer (d) and, optionally, a barrier layer only.

In a preferred embodiment, the support includes at least one hole, in particular a pre-made or made-in line hole.

The at least one hole advantageously allows vacuuming the package more rapidly and efficiently, as detailed for instance in WO2014060507A1, WO2011/012652 and WO2014/060507 in the name of the Applicant.

For microwave applications, the support will be made of substantially microwave transparent materials, such as for instance PP, PE, CPET, preferably of PP or CPET.

Examples of suitable supports for the anti-odour VSP package of the invention are Pentafood Kpseal APET/PE trays, Cryovac UBRT 1520-30, UBRT1826-27 PP/liner trays (in which the liner is made of a PE seal layer and a barrier EVOH layer) or Cryovac UBST 1826-27.

Optionally the support is provided with a pre-cut made on the bottom web. This pre-cut facilitates the opening of the package by the consumer, who grasps and tears the thus formed tab and peels off the top web.

The anti-odor VSP packages of the present invention can be manufactured according to any known VSP process.

The tight adhering of the top film to the surface of the support may be achieved by sealing, welding or sticking, preferably by sealing or welding.

The present anti-odor VSP packages may be prepared for instance with a VSP conventional process, in which the packaging material comprises a pre-formed support e.g. a tray and an anti-odor top film according to the invention.

The product to be packaged is first placed onto the support. Then the anti-odor top film, generally preheated, and the support, bearing the product to be packaged, are separately fed to the packaging station where the anti-odor top film is further heated by contact with the inner surface of a so-called "dome" which is then lowered over the supported product. The space between the top and supports is evacuated and the anti-odor top film is allowed to come into contact with the support and with the product to be packaged. The anti-odor top film may be held against the dome inner surface for instance by vacuum pressure that is then released when it is desired to allow the anti-odor top film, sufficiently heated, to drape over the product. Sealing of the top to the support is achieved by a combination of heat from the dome and pressure difference between the inside of the package and the outside atmosphere and can be aided by mechanical pressure and/or extra-heating.

When the film of the invention is used as a bottom web, conventional in line thermoforming processes known to the person skilled in the art, can be adopted.

It is a sixth object of the present invention the use of a film according to the first object for packaging smell-developing products, preferably smell-developing food products, especially poultry.

The anti-odour multilayer film of the invention can be used in a wide variety of packaging applications, including food packaging, in particular in food packaging of products, which develop unpleasant odours well before the term of their shelf-life.

Products tend to develop sulphides especially under anaerobic conditions, in particular when packaged in high gas barrier packages and/or under oxygen deprived modified atmosphere. Among other food products, the anti-odour multilayer film can be used in the packaging of fresh red meat, poultry, cheese, egg-products, pork, lamb and fish, preferably of poultry.

Examples

The present invention can be further understood by reference to the following examples that are merely illustrative and are not to be interpreted as a limitation to the scope of the present application. Several anti-odour multilayer films were manufactured, through the double bubble process described below, films that incorporated four odour absorbers: zeolites (ODO1, Comparative), zinc ricinoleate (ODO2), zinc ionomer (ODO3) and zinc oxide/magnesium oxide/zeolites (OD04, Comparative). Furthermore, in the present films we varied the layer in which odour absorbers were dispersed and their percentage by weight with respect to the weight of the entire film and with respect to the weight of the anti-odour layer (specific concentration).

We thus evaluated the influence of the percentage by weight of adsorber used on the percentage of $H_2S$ adsorbed and investigated whether the efficiency of adsorption was a function of the anti-odour layer position, composition and thickness.

The total thickness of the film remains unchanged within each group (Group I: six layers, 45.2 microns; Group II: six layers, 38.1 microns; Group III: four layers, 40 microns; Group IV: ten layers, 60.1 microns) as well as process conditions during manufacturing.

Regarding the mechanical and physical characteristics of the material, the addition of masterbatches did not involve considerable variations with respect to the films of reference and the presence of dispersed odour absorbers did not significantly affect the optical characteristics of the films.

For each one of these films, $H_2S$ adsorption capacity was measured. $H_2S$ was considered the best marker for unpleasant odours, because produced during the degradation process of the poultry and characterized by a low threshold of olfactory perception.

The adsorption capacity was measured through both laboratory and sensorial methods, in order to assess the relationship between the rigorous analytical feedback and the subjective feedback, the last being more adequate to represent the reaction of the consumer.

The reference, comparative and inventive films were manufactured from the polymers reported in Table 1a and 1b below:

Table 1a

| Trade name | Supplier | Chemical Nature | Acronym | Property | |
|---|---|---|---|---|---|
| Affinity PL 1281G1 | DOW | PE, VLD ET/OCT Copolymer - Branched, SS | VLDPE1 | Density | 0.9001 |
| | | | | MFR | 6.0 |
| | | | | Com. cont. | 13 |
| QUEO 1007 | Borealis | PE, VLD ET/OCT Copolymer - Linear, SS | VLDPE2 | Density | 0.910 |
| | | | | MFR2 | 6.6 |
| | | | | mp | 105 |
| | | | | Viscosity | 88 |
| Affinity PL 1880G | DOW | PE, VLD ET/OCT Copolymer Branched, SS | VLDPE3 | Density | 0.902 |
| | | | | MFR | 1.1 |
| | | | | Vicat SP | 86 |
| | | | | mp | 99 |
| Affinity PL 1850G | DOW | PE, VLD ET/OCT Copolymer - Branched, SS | VLDPE4 | Com. cont. Methyl Acrylate | 12.00 |
| | | | | Density | 0.9020 |
| | | | | Vicat SP | 85 |
| | | | | mp | 97.0 |
| | | | | MFR | 3.0 |
| Affinity PL 1845G | DOW | PE, VLD ET/OCT Copolymer - Linear, SS | VLDPE5 | Density | 0.91 |
| | | | | Vicat SP | 95 |
| | | | | mp | 103 |
| | | | | MFR | 3.5 |
| ATTANE SL 4102G | DOW | PE, VLD ET/OCT Copolymer - Linear, Ziegler/Natta | VLDPE6 | Cryst. point | 99 |
| | | | | Density | 0.905 |
| | | | | Vicat SP | 84 |
| | | | | mp | 122 |
| | | | | MFR2 | 1.0 |

(continued)

| Trade name | Supplier | Chemical Nature | Acronym | Property | |
|---|---|---|---|---|---|
| NUCREL 1202 | DuPont | ET/MA Copolymer - 10-20 wt% com. | EMAA | Com. cont. Methyl Acrylate | 12 |
| | | | | mp | 99 |
| | | | | Density | 0.94 |
| | | | | Number Pellets | Min 35 Max 55 |
| | | | | Vicat SP | 75 |
| | | | | MFR | 1.5 |
| Escorene ULTRA FL00119 | Exxon Mobil | ET/VA Copolymer - More than 20 wt % com. | EVA1 | Com. cont. Methyl Acrylate | 19.00 |
| | | | | Density | 0.942 |
| | | | | Vicat SP | 62.00 |
| | | | | mp | 85.00 |
| | | | | MFR | 0.65 |
| 1003 VN 4 | Total Petrochemicals | ET/VA Copolymer - 10-20 wt% com. | EVA2 | Density | 0.935 |
| | | | | Com. cont. | 13.5 |
| | | | | mp | 93 |
| | | | | MFR | 0.38 |
| TN2006 | Braskem | ET/VA Copolymer - 10-20 wt% com. | EVA3 | Density | 0.9400 |
| | | | | MFR | 0.70 |
| | | | | mp | 90 |
| | | | | Moist. Cont. | Max.0.3 |
| | | | | Vicat SP | 71 |
| | | | | Com. cont. | 12.0 |
| ELVAX 3165 | DuPont | ET/VA Copolymer 10-20 wt% com. | EVA4 | Density | 0.940 |
| | | | | MFR | 0.70 |
| | | | | mp | 87.0 |
| | | | | Moist. Cont. | Max.0.3 |
| | | | | Vicat SP | 69.0 |
| | | | | Com. cont. | 18.00 |
| | | | | Additives | 550 |
| EVA 1005 VN 35 | Total Petrochemicals | ET/VA Copolymer - 10-20 wt% com. | EVA5 | Density | 0.935 |
| | | | | MFR | 0.5 |
| | | | | mp | 91 |
| | | | | Vicat SP | 72.0 |
| | | | | Com. cont. | 12 |

(continued)

| Trade name | Supplier | Chemical Nature | Acronym | Property | |
|---|---|---|---|---|---|
| IXAN PV910 | SolVin | Vinylidene Chloride/Methyl Acrylate Copolymer - Stabilized | PVDC-MA | Density | 1.71 |
| | | | | Additives | 2 |
| | | | | Bulk Apparent Density | Min. 0.78 |
| | | | | Particle size | Min. 220 |
| | | | | Viscosity Relative | Min 1.44 Max 1.48 |
| | | | | Viscosity Solution | 1.46 |
| | | | | Com. cont. | 8.4 |
| | | | | Vol. Cont. | Max.0.3 |
| Odour master 649 | Addmaste r | Zeolite 4A in PE, LD (no Zn) | ODO1 | Density | 0.99 |
| | | | | Ash | 15 |
| | | | | Moist. Cont. | Max. 0.2 |
| | | | | MFR | 2.0 |
| MLL64907 Natural Anti Odour MB | SILVERG ATE | Zinc ricinoleate 8.8-10% ww in PE, LD (Zn 1.63% ww) | ODO2 | Density | 1.6 |
| | | | | MFR | 20 |
| Surlyn 1650 | DuPont | Zinc Neutralized ET MA Copolymer (Zn 0.91% ww) | ODO3 | Density | 0.940 |
| | | | | Additives | Min 1.95 Max 2.25 |
| | | | | MFR | 1.50 |
| | | | | mp | 97.0 |
| | | | | Moist. Cont. | Max. 0.06 |
| | | | | Vicat SP | 73.0 |
| | | | | Com. cont. | 12.0 |
| CC1013935 62F | PolyOne Corp | Odour Absorbers in LDPE: Abscents 300 6%wt, ZnO 7,5%wt, Elastomag 170 (MgO) 10% wt (Zn 6.0% wt Mg 6.0%) | ODO4 | Density | 1,104 |
| | | | | Additives | 6 |
| | | | | MFR | 3,7 |
| | | | | mp | 106,5 |
| | | | | Moist. Cont. | 0,05 |
| | | | | Ash content | 23,5 |

(continued)

| Trade name | Supplier | Chemical Nature | Acronym | Property | |
|---|---|---|---|---|---|
| DOWLEX XZ 89446 (DOWLEX 5057GC) | DOW | PE, LLD ET/OCT Copolymer Ziegler/ Natta | LLDPE | Density | 0.9158 |
| | | | | MFR | 2.11 |
| BYNEL 39E660 | DuPont | Maleic An.-Modified ET/VA Copolymer | EVA-md | Density | 0.940 |
| | | | | MFR | 2.50 |
| | | | | mp | 95.0 |
| | | | | Additives | 500 |
| | | | | Vicat SP | 72 |
| | | | | Com. cont. Maleic An. | Min 0.05 Max 0.09 |
| | | | | Com. cont. Vinyl Acetate | Min. 10.8 Max 12.8 |
| Eltex PKS 350 | Ineos | PP, PR/ET/BU Copolymer | EPC | Density | 0.895 |
| | | | | MFR | 5 |
| | | | | mp | 131 |
| | | | | Vicat SP | 105 |
| Infuse 9100.05 | DOW | ET/OCT Block copolymer | OBC | Density | 0.877 |
| | | | | MFR | 1 |
| | | | | mp | 120 |

Table 1b

| Trade name | Supplier | Chemical Nature | Acronym | Property | |
|---|---|---|---|---|---|
| ADMER NF 538E | Mitsui Chemical | Maleic An.-Modified PE, VLD | VLDPE-md | Density | 0,91 |
| | | | | Vicat SP | 85 |
| | | | | MFR | 4,1 |
| BYNEL 3101 | DuPont | Acid/Acrylate Modified ET/VA Copolymer | EVA-md1 | Density | 0,943 |
| | | | | Vicat SP | 65 |
| | | | | MFR | 3,2 |
| | | | | mp | 87 |
| | | | | Com. cont. | 18,4 |
| ULTRAMI DC33L | BASF | Polyamide - 6/66, Lubricated Poly (caprolactam /HMDA/adipic acid) | PA-6/66 | Density | 1,12 |
| | | | | mp | 196 |
| Grivory G21 Natural | EMS-Grivory | Polyamide, Amorphous - Poly (HMDA/IA/TA | PA-61/6T | Density | 1,82 |
| | | | | Tg temperature | 125 |
| | | | | MFR | 20 |

(continued)

| Trade name | Supplier | Chemical Nature | Acronym | Property | |
|---|---|---|---|---|---|
| RAMAPET N180 | Indorama | Polyester, copolymer of TA, IA and mono-EG | PET | Density | 1,4 |
| | | | | Tg temperature | 78 |
| | | | | mp | 245 |
| | | | | Intrinsic Viscosity | 0.80 |

Abbreviations and keys: Melt Flow Rate MFR(Cond. 190°C/ 02.16 kg (E); $MFR^2$ (Cond. 200°C/2.16 Kg); Vicat Softening point: Vicat SP; Comonomer content: Com. cont.; Crystallization point: Cryst point; % comonomer: % com; Glass transition: Tg; Polypropylene PP; Ethylene ET; Polyethylene PE: Octene OCT; Methacrylic Acid MA; Propylene PR; Vinyl Acetate VA; Butene: Bu; Maleic Anhydride: Maleic An.; High Density: HD; Linear Low Density: LLD; Very Low Density: VLD; Low Density: LD; Medium density: MD; Single Site: SS; Terephthalic acid TA; isophthalic acid IA; dicylohexandimethanol DCHDM; hexamethylenediamine HMDA; ethylene glycol EG; masterbatch MB; Melting Point mp; Moisture Content Moist. Cont.; Volatile Content Vol. Cont.;

Unity of measure: Density $g/cm^3$; Melt Flow Rate g/10 min; Moisture content: %; Comonomer content: %; Ash: %; Additives: % or ppm (500); Volatile content: %; Particle size: microns; Melting point: °C; Vicat Softening point: °C; Glass transition temperature: °C; Crystallization point: °C; Viscosity: mPa.sec; Intrinsic Viscosity: dl/g; Number Pellets: No/g; Particle Size: microns.

In the following Tables 2 to 8 the structures of the films of reference (REF A, REF B, REF C and REF D), of the comparative films C1, C2, C2a, C2b, C3, C4, C5, C6, C6a and C7 and of the films of the invention (Ex. 1 to 4, Ex. 7 to 14, Ex. 16 and Ex. 17) are reported.

In all the following pertinent Tables, the percentages of ODO1, ODO2 and ODO4 refer to the amount of master batch (and not to the amount of anti-odour compound), while for ODO3 the percentages relate to the neat anti-odour resin (zinc ionomer).

Table 2: Group I films (six layers films)

| n) | a) | REF A | C1 | Ex. 1 | Ex. 2 | Ex. 3 | Ex. 4 |
|---|---|---|---|---|---|---|---|
| 1 | 9.0 | VLDPE1 80% VLDPE2 20% | VLDPE180% VLDPE2 20% | VLDPE1 80% VLDPE2 20% | VLDPE1 80% VLDPE2 20% | VLDPE1 80% VLDPE2 20% | VLDPE1 80% VLDPE2 20% |
| 2 | 12.8 | VLDPE3 60% EMAA 40% | VLDPE3 57.6% EMAA 38.4% ODO1 4% | VLDPE3 56% EMAA 40% ODO2 4% | VLDPE3 58.8% EMAA 39.2% ODO2 2% | VLDPE3 57.6% EMAA 38.4% ODO3 4% | VLDPE3 58.8% EMAA 39.2% ODO3 2% |
| 3 | 6.8 | EVA1 100% | EVA1 100% | EVA1 100% | EVA3 100% | EVA1 100% | EVA1 100% |
| 4 | 4.6 | PVDC-MA 100% | PVDC-MA 100% | PVDC-MA 100% | PVDC-MA 100% | PVDC-MA 100% | PVDC-MA 100% |
| 5 | 3.8 | EVA1 100% | EVA1 100% | EVA1 100% | EVA3 100% | EVA1 100% | EVA1 100% |
| 6 | 8.2 | VLDPE4 70% EVA2 30% | VLDPE4 70% EVA2 30% | VLDPE4 70% EVA2 30% | VLDPE4 70% EVA2 30% | VLDPE4 70% EVA2 30% | VLDPE4 70% EVA2 30% |
| | b) | - | 1.042 | 1.053 | 0.523 | 1.04 | 0.52 |
| | c) | - | 28.3 | 28.3 | 28.3 | 28.3 | 28.3 |
| | q) | - | 0.07 | 0.03 | 0.04 | 0.02 | 0.07 |

Film total thickness 45.2 microns;
ODO1 zeolites; ODO2 zinc ricinoleate; ODO3 zinc ionomer;
a) thickness of each layer in microns
b) % by weight of anti-odour MB or anti-odour resin vs total film weight
c) % thickness of anti-odour layer 2 vs total film thickness
q) % metal vs anti-odour layer(s) (w/w)
n) layers in the film, in which 1: sealant; 2: bulk/anti-odour; 3: tie; 4: gas-barrier; 5: tie; 6: outer

Table 3: Group I films (six layers films)

| n) | a) | REF A | C2 | C2a | C2b |
|---|---|---|---|---|---|
| 1 | 9.0 | VLDPE1 80% VLDPE2 20% | VLDPE1 70% VLDPE2 20% ODO4 10 % | VLDPE1 80% VLDPE2 20% | VLDPE1 80% VLDPE2 20% |
| 2 | 12.8 | VLDPE3 60% EMAA 40% | VLDPE3 60% EMAA 40% | VLDPE3 60% EMAA 33% ODO4 7% | VLDPE3 60% EMAA 40% |
| 3 | 6.8 | EVA1 100% | EVA1 100% | EVA1 100% | EVA1 87% OD04 13% |
| 4 | 4.6 | PVDC-MA 100% | PVDC-MA 100% | PVDC-MA 100% | PVDC-MA 100% |
| 5 | 3.8 | EVA1 100% | EVA1 100% | EVA1 100% | EVA1 100% |
| 6 | 8.2 | VLDPE4 70% EVA2 30% | VLDPE4 70% EVA2 30% | VLDPE4 70% EVA2 30% | VLDPE4 70% EVA2 30% |
| | b) | -- | 1.83 | 1.04 | 1.87 |
| | c) | -- | 19.9 | 28.3 | 15.0 |
| | q) | -- | 0.60 | 0.42 | 0.78 |
| | q)' | -- | 1.21 | 0.84 | 1.56 |

Film total thickness 45.2 microns;
ODO4: zinc oxide, magnesium oxide and zeolites;
a) thickness of each layer in microns
b) % by weight of anti-odour MB vs total film weight
c) % thickness of anti-odour inner layer 2 or 3 vs total film thickness
q) % zinc vs anti-odour layer(s) (w/w)
q)' % metals vs anti-odour layer(s) (w/w)
n) layers in the film, in which 1: sealant; 2: bulk/anti-odour; 3: tie; 4: gas-barrier; 5: tie; 6: outer

Table 4: Group II films (six layers films)

| n) | a) | REF B | C3 | C4 | C5 |
|---|---|---|---|---|---|
| 1 | 5.7 | VLDPE1 80% VLDPE5 20% | VLDPE1 80% VLDPE5 20% | VLDPE1 80% VLDPE5 20% | VLDPE1 80% VLDPE5 20% |
| 2 | 11.6 | VLDPE5 15% EMAA 30% LLDPE 55% | VLDPE5 15% EMAA 30% LLDPE 55% | VLDPE5 14.4% EMAA 28.8% LLDPE 52.8% ODO1 4% | VLDPE5 14.4% EMAA 28.8% LLDPE 52.8% ODO1 4% |
| 3 | 4.2 | EVA4 100% | EVA4 90% ODO1 10% | EVA4 90% ODO1 10% | EVA4 100% |
| 4 | 5.1 | PVDC-MA 100% | PVDC-MA 100% | PVDC-MA 100% | PVDC-MA 100% |
| 5 | 2.9 | EVA4 70% EVA-md 30% | EVA4 70% EVA-md 30% | EVA4 70% EVA-md 30% | EVA4 70% EVA-md 30% |

(continued)

| n) | a) | REF B | C3 | C4 | C5 |
|---|---|---|---|---|---|
| 6 | 8.6 | EPC 85% OBC 15% | EPC 85% OBC 15% | EPC 85% OBC 15% | EPC 85% OBC 15% |
| | b) | - | 1.024 | 2.128 | 1.106 |
| | c) | - | 11.1 | 41.6 | 30.5 |

Film total thickness 38.1 microns;

ODO1: zeolites

a) thickness of each layer in microns

b) % by weight of anti-odour MB or anti-odour polymer vs total film weight

c) % thickness of anti-odour layers (layer 2 and/or 3) vs total film thickness

n) layers in the film, in which 1: sealant; 2: bulk/anti-odour; 3: tie/anti-odour; 4: gas-barrier; 5: tie; 6: outer

Table 5: Group II films (six layers films)

| | a) | REF B | Ex. 7 | Ex. 8 | Ex. 9 |
|---|---|---|---|---|---|
| 1 | 5.7 | VLDPE1 80% VLDPE5 20% | VLDPE1 80% VLDPE5 20% | VLDPE1 80% VLDPE5 20% | VLDPE1 80% VLDPE5 20% |
| 2 | 11.6 | VLDPE5 15% EMAA 30% LLDPE 55% | VLDPE5 15% EMAA 30% LLDPE 55% | VLDPE5 14.4% EMAA 28.8% LLDPE 52.8% ODO2 4% | VLDPE5 14.4% EMAA 28.8% LLDPE 52.8% ODO2 4% |
| 3 | 4.2 | EVA4100% | EVA4 90% ODO2 10% | EVA4 90% ODO2 10% | EVA4100% |
| 4 | 5.1 | PVDC-MA 100% | PVDC-MA 100% | PVDC-MA 100% | PVDC-MA 100% |
| 5 | 2.9 | EVA4 70% EVA-md 30% | EVA4 70% EVA-md 30% | EVA4 70% EVA-md 30% | EVA4 70% EVA-md 30% |
| 6 | 8.6 | EPC 85% OBC 15% | EPC 85% OBC 15% | EPC 85% OBC 15% | EPC 85% OBC 15% |
| | b) | -- | 1.06 | 2.17 | 1.12 |
| | c) | -- | 11.1 | 41.6 | 30.5 |
| | q) | -- | 0.16 | 0.23 | 0.07 |

Film total thickness: 38.1 microns

ODO2: zinc ricinoleate

a) thickness of each layer in microns

b) % by weight of anti-odour MB or anti-odour polymer vs total film weight

c) % thickness of anti-odour layers (layer 2 and/or 3) vs total film thickness

q) % metal vs anti-odour layer(s) (w/w)

n) layers in the film, in which 1: sealant; 2: bulk/anti-odour; 3: tie/anti-odour; 4: gas-barrier; 5: tie; 6: outer

Table 6: Group II films (six layers films)

| | a) | Ex. 10 | Ex. 11 | Ex. 12 | Ex. 13 | Ex. 14 |
|---|---|---|---|---|---|---|
| 1 | 5.7 | VLDPE1 80% VLDPE5 20% | VLDPE1 80% VLDPE5 20% | VLDPE1 80% VLDPE5 20% | VLDPE1 80% VLDPE5 20% | VLDPE1 80% VLDPE5 20% |
| 2 | 11.6 | VLDPE5 15% EMAA 30% LLDPE 55% | VLDPE5 15% EMAA 30% LLDPE 55% | VLDPE5 15% EMAA 30% LLDPE 55% | EVA1 80% ODO3 20% | EVA1 60% ODO3 40% |

(continued)

|   |   | a) | Ex. 10 | Ex. 11 | Ex. 12 | Ex. 13 | Ex. 14 |
|---|---|---|---|---|---|---|---|
| 3 | 4.2 | | EVA1 80%<br>ODO3 20% | EVA1 90%<br>ODO3 10% | EVA1 60%<br>ODO3 40% | EVA1 100% | EVA1 100% |
| 4 | 5.1 | | PVDC-MA 100% | PVDC-MA 100% | PVDC-MA 100% | PVDC-MA 100% | PVDC-MA 100% |
| 5 | 2.9 | | EVA1 70%<br>EVA-md 30% | EVA1 70%<br>EVA-md 30% | EVA1 70%<br>EVA-md 30% | EVA1 70%<br>EVA-md 30% | EVA1 70%<br>EVA-md 30% |
| 6 | 8.6 | | EPC 85%<br>OBC 15% | EPC 85%<br>OBC 15% | EPC 85%<br>OBC 15% | EPC 85%<br>OBC 15% | EPC 85%<br>OBC 15% |
|   |   | b) | 2.04 | 1.02 | 4.08 | 6.00 | 11.20 |
|   |   | c) | 11.1 | 11.1 | 11.1 | 30.5 | 30.5 |
|   |   | q) | 0.18 | 0.09 | 0.36 | 0.18 | 0.36 |

Film total thickness: 38.1 microns

ODO3: zinc ionomer

a) thickness of each layer in microns

b) % by weight of anti-odour MB or anti-odour polymer vs total film weight

c) % thickness of anti-odour layers (layer 2 or 3) vs total film thickness

q) % metal vs anti-odour layer(s) (w/w)

Table 7: Group III films (four layers films)

| n) | a) | REF C | C6 | C6a |
|---|---|---|---|---|
| 1 | 8.7 | 80% VLDPE1<br>20% VLDPE2 | 72% VLDPE1<br>18% VLDPE2<br>10% ODO4 | 80% VLDPE1<br>20% VLDPE2 |
| 2 | 17.1 | 70% EVA5<br>30% VLDPE6 | 70% EVA5<br>30% VLDPE6 | 66.5% EVA5<br>28.5% VLDPE6<br>5% ODO4 |
| 3 | 4.1 | PVDC-MA | PVDC-MA | PVDC-MA |
| 4 | 10.1 | 70% EVA5<br>30% VLDPE2 | 70% EVA5<br>30% VLDPE2 | 70% EVA5<br>30% VLDPE2 |
|   | b) | - | 1.99 | 2.00 |
|   | c) | - | 21.8 | 42.8 |
|   | q) | - | 0.60 | 0.30 |
|   | q)' | - | 1.20 | 0.60 |

Film total thickness: 40 microns

ODO4: zinc oxide, magnesium oxide and zeolites

a) thickness of each layer in microns

b) % by weight of anti-odour MB vs total film weight

c) % thickness of anti-odour layers (layer 1 or 2) vs total film thickness

q) % zinc vs anti-odour layer(s) (w/w)

q)' % metals vs anti-odour layer(s) (w/w)

n) layers in the film, in which 1: sealant; 2: bulk/anti-odour; 3: gas-barrier; 4: outer.

Table 8: Group IV films (ten layers films)

| n) | a) | REF D | C7 | Ex. 16 | Ex. 17 |
|---|---|---|---|---|---|
| 1 | 17.9 | VLDPE1 80% VLDPE5 20% | VLDPE176% VLDPE5 20% ODO3 4% | VLDPE1 80% VLDPE5 20% | VLDPE1 80% VLDPE5 20% |
| 2 | 4.4 | VLDPE-md 70% EVA-md 30% | VLDPE-md 70% EVA-md 30% | VLDPE-md 66% EVA-md 27% ODO3 7% | VLDPE-md 70% EVA-md 30% |
| 3 | 8.2 | PA-6/66 90% PA-6I/6T 10% | PA-6/66 90% PA-6I/6T 10% | PA-6/66 90% PA-6I/6T 10% | PA-6/66 83% PA-6I/6T 10% ODO3 7% |
| 4 | 3.4 | VLDPE-md 70% EVA-md 30% | VLDPE-md 70% EVA-md 30% | VLDPE-md 66% EVA-md 30% ODO3 7% | VLDPE-md 70% EVA-md 30% |
| 5 | 4.4 | PVDC-MA 100% | PVDC-MA 100% | PVDC-MA 100% | PVDC-MA 100% |
| 6 | 2.4 | VLDPE-md 70% EVA-md 30% | VLDPE-md 70% EVA-md 30% | VLDPE-md 66% EVA-md 27% ODO3 7% | VLDPE-md 70% EVA-md 30% |
| 7 | 3.4 | EVA-md1 100% | EVA-md1 100% | EVA-md1 100% | EVA-md1 100% |
| 8 | 8.2 | PA-6/66 90% PA-6I/6T 10% | PA-6/66 90% PA-6I/6T 10% | PA-6/66 90% PA-6I/6T 10% | PA-6/66 90% PA-6I/6T 10% |
| 9 | 3.9 | EVA-md1 100% | EVA-md1 100% | EVA-md1 100% | EVA-md1 100% |
| 10 | 3.9 | PET 100% | PET 100% | PET 100% | PET 100% |
| | b) | - | 1.01% | 1.03% | 1.00% |
| | c) | | 30% | 17% | 13.6% |

Film total thickness: 60.1 microns

ODO3: zinc ionomer

a) thickness of each layer in microns

b) % by weight of total ODO3 vs total film weight

c) % total thickness of anti-odour layers vs total film thickness

n) layers in the film, in which 1: sealant; 2/4/6 (Ex 20) and 3 (Ex 21)): anti-odour; 5 gas-barrier; 10: outer.

Films manufacture

The multilayer films listed in tables 2 to 7 above were prepared by extrusion coating through a round die. A substrate formed of layers 1 to 3 (in case of 6 layers final film) or of layers 1 and 2 (in case of 4 layers final film) wherein the sealant layer (a) is the innermost layer of the tube, were co-extruded, quickly quenched with a water cascade, irradiated at a dosage level of 64 kGy and coated with the sequence of three or two layers (barrier layer (b) / tie layer / outer layer (c) in case of 6 layers film or barrier layer (b) / outer layer (c) in case of 4 layers film), wherein the outer layer (c) is the outermost layer of the overall tube. The extrusion-coated tape was quenched, re-heated by passing through a water bath at the temperature reported below, and oriented by trapped-bubble process at the temperature and at the orientation ratio shown in Table 9 below:

Table 9

| Films | Group | Water bath temperature | Orientation Ratios |
|---|---|---|---|
| REF A, C1, C2, C2a, C2b, Ex. 1-Ex. 4 | I | 86-88°C | 3.7 in LD and 4.0 in TD |
| REF B, C3 - C5, Ex. 7 - Ex. 14 | II | 88-90°C | 3.9 in LD and 3.9 in TD |

(continued)

| Films | Group | Water bath temperature | Orientation Ratios |
|---|---|---|---|
| REF C, C6, C6a | III | 88-90°C | 3.8 in LD and 3.9 in TD |

The odour absorbers were incorporated in the composition of the selected inner layer(s) (d) by using masterbatches ODO1, ODO2 and ODO4 for the anti-odour zeolites, zinc ricinoleate and zinc oxide / magnesium oxide/zeolites and by using the pure zinc ionomer (Surtyn) for ODO3.

ODO1:

The matrix of the masterbatch consists of LDPE. The zeolites herein incorporated are class 4A, namely have pore size of 4 Å suitable to adsorb H2S. The MB has a density of 0.99 g I cc, Melting temperature of about 107 °C.

The efficiency of adsorption of the zeolites can be impaired in the presence of water, since many zeolites bind water with strength compared to other less polar compounds. We thus had expected to get satisfactory odour absorbing performance by moving ODO1 from the outer water exposed sealant layer into the inner second/third layer(s) but this was not the case (see % of absorbed H2S for comparative films C3, C4 and C5 in Table 11).

ODO2: Zinc ricinoleate

The matrix of the masterbatch was made of LDPE; the percentage of zinc ricinoleate was between 8.8 and 10% by weight The Applicant realized that zinc ricinoleate was very effective towards gaseous compounds containing suffur, as it seemed able to bind chemically with these molecules, thus stably removing unpleasant odours from the environment. Zinc ricinoleate ensured a good thermal stability during extrusion processes and was particularly suitable to be used in combination with polyolefins. The multilayer films of Table 8 (reference film D, comparative film C7, Examples 16 and 17 films) have been prepared by extrusion through a round die of a substrate consisting of layer 1 to layer 6. The extruded multilayer tubular film thus obtained was then quenched with a water cascade at 8°C, and finally extrusion coated with layer 7 to layer 10. During the extrusion of the substrate tubing of the comparative example, com starch is added (C300R average particle size 15 microns by Arkem PRS) through a pipe systems which also provided the air used to adjust the tube dimensions.

The obtained tube is then rapidly quenched at 10°C and biaxially oriented by passing it through a hot water bath kept at a temperature of 94°C, then inflated to get transverse orientation and stretched to get longitudinal orientation. The orientation ratios were from about 3.4:1 in the longitudinal direction and 3.1:1 in the transverse direction. The oriented tubular film was then quenched by cold air at 10°C. During processing a very good process stability, in particular a resistance to high draw ratio without negative effect on the optical properties, was observed.

Test methods

Film and package properties were assessed according to the following test methods:
Haze (before and after shrink):

- before shrink following ASTM D1003
- haze after shrink was measured according to an internal method. Sample preparation followed ASTM D2732, and then ASTM D1003 was adopted for haze measurement. At least 3 test specimens for each film were trimmed to a size 15 cm × 15 cm, placed in a pair of metal tongs and subjected to shrink process in hot water at 85°C for 5 seconds and then cooled down in a cold-water bath for 5 seconds.

The specimen were then let to dry, mounted in the sample holder and haze was measured following ASTM D1003.

Gloss (angle 60°, LD and TD) ASTM D2457. The values reported herein, are average values of the measurements performed in longitudinal and transverse directions.

Elastic Modulus at 23°C: ASTM D882
Tensile Strength and Elongation at break at 23°C: ASTM D882 Tensile strength represents the maximum tensile load per unit area of the original cross-section of the test specimen required to break it, expressed as kg/cm2.

Elongation at break represents the increase in length of the specimen, measured at the moment of rupture expressed as percentage of the original length. Measurements were performed with Instron tensile tester equipped with a load cell type CM (1-50 kg), in an environmental chamber set at 23°C, on specimens previously stored at 23°C and 50% RH for minimum of 24 hours. Tensile and elongation measurements were recorded simultaneously and the reported results are the average values. Shrink Free Shrink (ASTM D2732) it is the percent dimensional change in a 10 cm × 10 cm specimen of film when subjected to a selected heat; it has been measured following ASTM Standard Test Method D 2732, immersing the specimen for 5 seconds in a heated oil bath at 85°C.

Oxygen permeability: ASTM D-3985

Absorbed Hydrogen sulphide by Gas-chromatography (FPD-GC)

In order to select the odorous compound most representative of degradation of poultry meat, an olfactometry preliminary analysis was performed.

The olfactometry preliminary analysis, conducted according to the method UNI EN 13725 (Determination of odour concentration by dynamic olfactometry), was carried out on 1 kg fresh poultry, packaged in barrier bags and vacuumized. The shelf-life of this meat packaged in barrier bags was 12 days and the analyses showed that the concentration of $H_2S$ was the main indicator of freshness. We then measured $H_2S$ concentration, by using a GC-FPD (ISO 19739), said concentration reaching after 12 days the value of 50 ppm.

Gas chromatograph FPD analysis

Samples preparation

Starting from the preliminary analysis outcome, a gaseous mixture of 50 ppm $H_2S$ in $N_2$ was prepared and sample bags were filled with this mixture. The sample bags were prepared from films made of Tedlar ™ and from the reference, the comparison and the inventive films (by using extruded tubing of the different materials). The films were sealed to match the size of 21 cm × 40 cm and a screw cap sampling valve commercialized by Sigma Aldrich was added to each bag.

Then the bags were filled with a mixture of 50ppm of $H_2S$ in $N_2$ through the valves.

GC system

The Hydrogen Sulphide was analysed using a gas chromatography equipped with a FPD detector (Flame Photometric Detector). That is a specific detector suitable for all volatile chemical compound containing Sulphide atoms. The GC system was a HP 6890 equipped with Hamamatsu H9261 FPD detector.

The separation was achieved using an OV1 - MS column with an inside diameter of 0. 32 mm and 50 meter length with an internal coating of 5 microns. The GC oven was kept at 50°C for 30 min while the detector FPD was kept at 200 °C. The injection system was a 0.2 ml loop valve inert for H2S and it was kept at 50 °C. For each bag, 3 gas samples were drawn by injection. When changing material, the CG system and the injection loop were purged with carrier gas. The measurements of the all the bags were carried out by connecting the sample valve to the injection system and by flushing for 60 sec the gaseous stream in the feeding loop. After 60 sec, the valve is closed and the gaseous mixture injected in GC system. After a while, a chromatographic peak will appear at the characteristic retention time of the H2S. The carrier gas used was Helium.

Calculations

In order to assess the percentage of H2S adsorbed by the sample bags, 3 bags made of Tedlar ™ (Tedlar is the trade name of a film of polyvinyl fluoride -PVF- manufactured by DuPont) equipped with the sampling valve were filled with the H2S/N2 mixture (50 ppm of H2S). The Tedlar bag did not contain odour adsorbers, had high gas barrier properties and had no gas leakage towards the external environment, thus ensuring that the internal gas composition remained unchanged over time. The peak area of H2S measured by GC system on Tedlar bags was taken as the reference value (herein called "reference peak") for the calculation reported below.

In the same way 3 or 6 bags of reference, comparative and inventive films were prepared, filled with H2S/N2 mixture through the sampling valve and the gas mixture was analysed through in the GC system as described above. The peak area of these samples is called "sample peak".

The percentage of H2S absorbed by the anti-odour layer can be calculated according to the following formula:

$$\% \text{ adsorbed H2S} = (\text{Area of reference peak - Area of sample peak}) / (\text{Area of reference peak}) \times 100$$

Tested samples

The following bag samples were prepared:

j) 3 bags for each one of REF A, C1, C2b, Ex. 1, Ex. 2, Ex. 3 and Ex. 4 films (Group I, Tables 2 and 3) for a total of 21 samples;

k) 6 bags for each one of REF B, C3, C4, C5, Ex. 7, Ex. 8, Ex. 9, Ex. 10, Ex. 11, Ex. 12, Ex. 13 and Ex. 14 films (Group II, Tables 4 to 6) for a total of 72 samples;

l) 6 bags for each one of REF C, C6 and C6a films (Group III, Table 7) for a total of 18 samples;

m) 3 bags for each one of REF D, C7, Ex. 16 and Ex. 17 films (Group IV, Table 8) for a total of 12 samples.

For Group I, III and IV sample bagos, the analysis was performed according to the following conditions: all the samples were kept in a thermostatic room at the temperature of 20 °C; the injections (3 for each bag) were made at the times reported in Tables 10,12 and 13, these times being measured after the initial filling of the bag with the gaseous mixture.

For Group II sample bags, 3 samples for each film were kept in a thermostatic room at the temperature of 20°C and 3 samples for each film were kept in a cold room at a temperature of 4 °C to simulate the conditions of preservation of poultry meat and to evaluate the possible influence of the variation of temperature on the adsorption. The injections (3 for each sample) were made at the times reported in Table 11.

In the following Tables 10 to 13 the amounts of hydrogen sulphide (%) absorbed by the reference, comparative and inventive films at the reported various times after filling of the bag with the standard gaseous mixture (50 ppm of H2S in nitrogen) are reported:

Table 10 (at 20°C) Group I films

| Film | MB | Time (h) | % Absorbed Hydrogen sulphide |
|---|---|---|---|
| REF A | no | 4 | 8 |
| | | 24 | 10 |
| | | 96 | 10 |
| C1 | ODO1 | 4 | 4 |
| | | 24 | 5 |
| | | 96 | 5 |
| Ex. 1 | ODO2 | 4 | 21 |
| | | 24 | 55 |
| | | 48 | 65 |
| | | 72 | 65 |
| Ex. 2 | ODO2 | 4 | 3 |
| | | 24 | 24 |
| | | 48 | 27 |
| | | 72 | 33 |
| Ex. 3 | ODO3 | 4 | 36 |
| | | 24 | 57 |
| | | 48 | 63 |
| | | 72 | 67 |
| | | 98 | 71 |

(continued)

| Film | MB | Time (h) | % Absorbed Hydrogen sulphide |
|---|---|---|---|
| Ex. 4 | | 4 | 15 |
| | ODO3 | 24 | 20 |
| | | 48 | 29 |
| | | 72 | 31 |
| | | 98 | 33 |
| C2b | ODO4 | 4 | 18 |
| | | 24 | 23 |
| | | 48 | 36 |
| ODO1: zeolites; ODO2: zinc ricinoleate; ODO3: zinc ionomer; ODO4: zinc oxide/ magnesium oxide/zeolites | | | |

The above films of Group I are 6 layers films of 45.2 microns of thickness.

As can be seen form the data above, the Reference film REF A (no anti-odour) and the comparative film C1 (zeolites in the second layer) did not show any significant anti-odour effect.

The films of Ex. 1 and 2, that contained zinc ricinoleate as anti-odour in the second inner layer, were characterized by an interesting concentration related anti-odour activity.

The films of Ex. 3 and 4 comprised zinc ionomer as anti-odour in the second layer, at a concentration of 4% and 2% respectively. Especially for the film of Ex. 3 a remarkably high and rapid H2S capture was observed.

The film of C2b included a mixed anti-odour compound (ODO4 comprises zinc oxide, magnesium oxide and zeolites) in the third layer, which was much thinner than the second layer (6.8 microns vs 12.8 microns)..

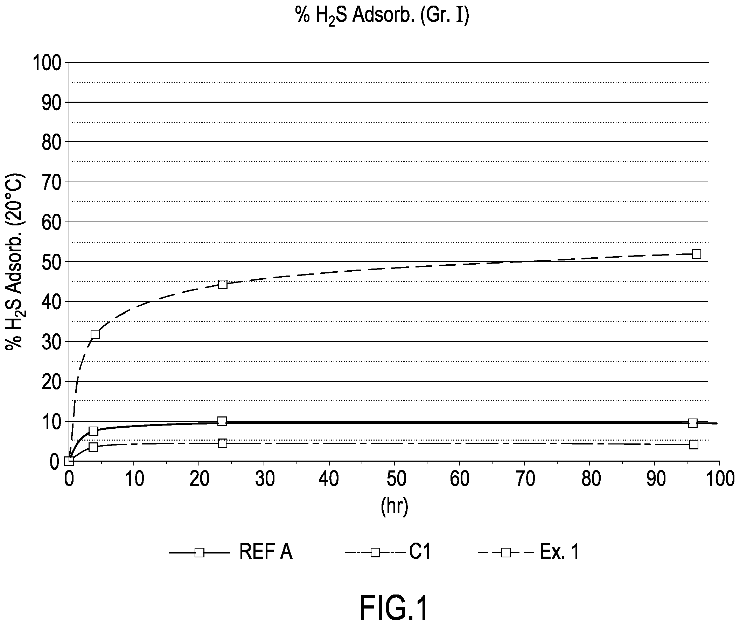

With reference to Figure 1, the film which incorporated zinc ricinolate masterbatch ODO2 (Ex. 1), performed better in terms of percentage of adsorbed H2S compared to ODO1 masterbatch (C1); indeed, it can be noted that the amount of H2S remaining in the sample product with the film with ODO1 is substantially comparable or even higher to that of a package free of odour absorbers.

For all three curves, it was observed a more rapid increase in the adsorption after the first 4 hours following injection of the gaseous mixture; in particular, the film with masterbatch ODO1 (C1) reached 4% of adsorption after 4 hours, and then remained stable at around 5% for the remaining time. The film with masterbatch ODO2 (Ex. 1) adsorbed quickly H2S in the first 4 hours until reaching 32% of the amount adsorbed, still increased but more slightly up to 45% after 24 hours, and finally slowly reached the 53 % within 96 hours.

Table 11: Group II films (at 4°C and 20°C)

| Film | MB | % absorbed Hydrogen sulphide | | | | | |
|---|---|---|---|---|---|---|---|
| | | T = 20°C | | | T = 4°C | | |
| | Time | 4h | 24h | 48h | 4h | 24h | 48h |
| REF B | no | 4 | 17 | 19 | | | |
| C3 | ODO1 | 4 | 6 | 6 | 0 | 11 | 12 |
| REF B | no | 4 | 17 | 19 | | | |
| C3 | ODO1 | 4 | 6 | 6 | 0 | 11 | 12 |
| C4 | ODO1 | 4 | 11 | 16 | 0 | 10 | 12 |
| C5 | ODO1 | 6 | 6 | 8 | 0 | 8 | 8 |
| Ex. 7 | ODO2 | 54 | 93 | 97 | 24 | 79 | 94 |
| Ex. 8 | ODO2 | 65 | 96 | 98 | 30 | 78 | 94 |
| Ex. 9 | ODO2 | 20 | 35 | 51 | 8 | 12 | 27 |
| Ex. 10 | ODO3 | 68 | 97 | 100 | | | |
| Ex. 11 | ODO3 | 52 | 72 | 81 | | | |

(continued)

| REF B | no | 4 | 17 | 19 | | | |
|-------|-----|-----|-----|-----|---|---|---|
| Ex. 12 | ODO3 | 56 | 98 | | | | |
| Ex. 13 | ODO3 | 97 | 100 | | | | |
| Ex. 14 | ODO3 | 99 | 100 | | | | |
| ODO1: zeolites; ODO2: zinc ricinoleate; ODO3: zinc ionomer; ODO4: zinc oxide/ magnesium oxide/zeolites | | | | | | | |

The above films of Group II are 6 layers film of 38.1 microns thickness.

As can be seen form the data above, the Reference film REF B (no anti-odour) and the comparative films C3-C5 (zeolites in the second layer and / or third layer) showed no or a negligible anti-odour effect, both at 20°C and at 4°C.

On the contrary, the films of Ex. 7 to 9, characterized by the presence of zinc ricinoleate in the third, in the second and third, and in the second layer respectively, performed very well at both temperatures. The film of Ex. 7 in particular showed a very high activity, particularly surprising as the anti-odour layer far from the surface and was very thin.

All results obtained above demonstrated the superiority of zinc ricinoleate in respect of H2S, with respect to the zeolites, as H2S absorber.

In particular, the data obtained with the films of Ex. 7 to 9 above, showed that the dispersion of 1% by weight of the masterbatch containing zinc ricinoleate with respect to the total weight of the film in a thin layer (Ex. 7) the third layer measuring 4.2 microns against 11.8 microns of the second layer, is as efficient as the dispersion of 2% of the same masterbatch by weight relative to the total weight of the film in the second and in the third layer. (Ex. 8).

This is a very positive outcome: by using half the amount of masterbatch approximately the same percentages of H2S adsorption were obtained, with lower costs and reduced haze.

The films of Ex. 10 to 14 contained zinc ionomer as anti-odour (ODO3), in the third (Ex.10-12) or second (Ex. 13, 14) layer and showed excellent performance.

The same trend of best efficacy when the MB is concentrated in the third thin inner layer was also observed. In fact, the film of Ex. 10 only comprising 2% by weight with respect to the total film weight, of zinc ionomer in the third 4.2 micron layer, performed as well as the film of Ex. 13, in which the content of zinc ionomer was about 6% by weight dispersed in the second 11.6 micron layer.

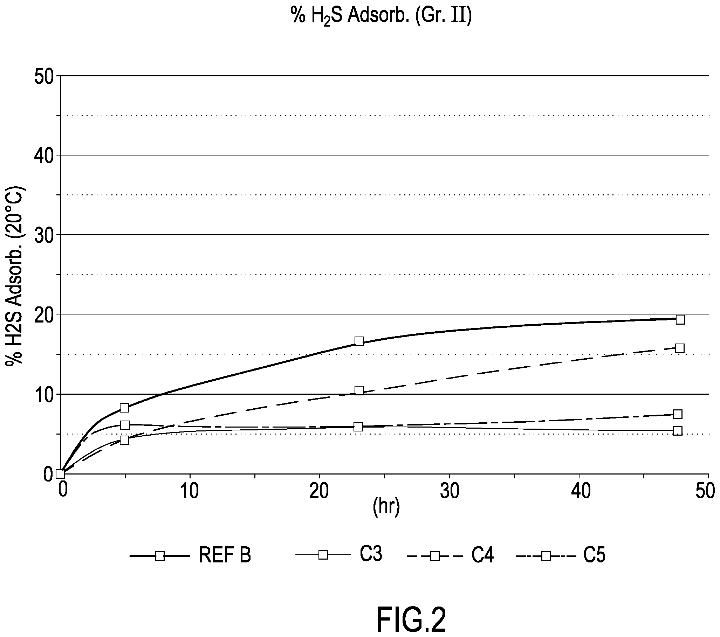

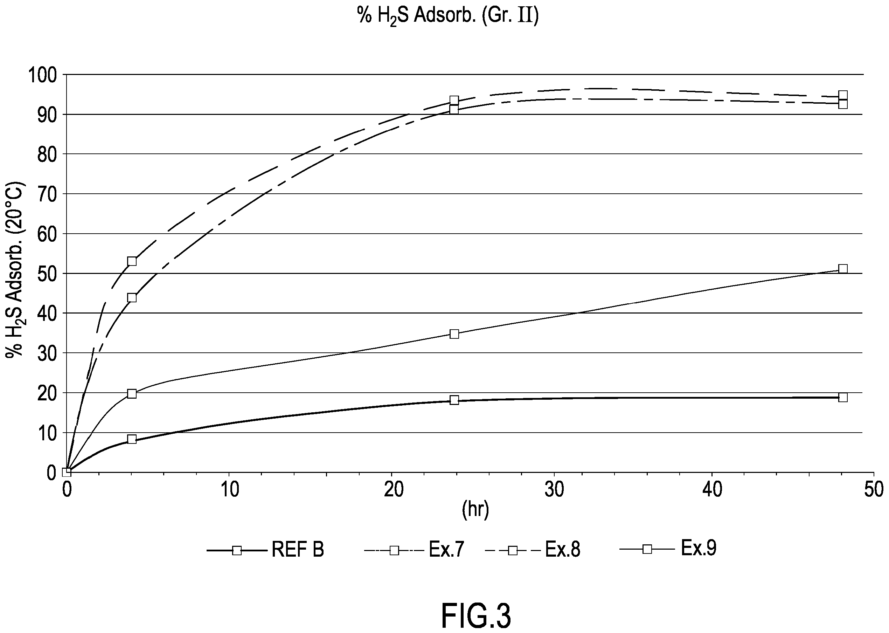

Figures 2 and 3 show the percentage of H2S absorbed in function of time and at a temperature of 20°C; in particular the first graph (Figure 2) relates to the films containing the masterbatch ODO1 (zeolites), the second one (Figure 3) to the film containing masterbatch ODO2 (zinc ricinoleate). From these graphs (Figures 2 and 3), the superiority of adsorption of the films with the masterbatch ODO2 was confirmed.

In detail, it can be seen in Figure 2 how the percentage of adsorption of H2S did not show a significant variation when the masterbatch ODO1 is added at a percentage of 1% by weight with respect to the total weight of the film, in the second rather than in the third layer. In fact, after 48 hours in the case of zeolites dispersed in the second layer (C5), the adsorbed H2S reached a maximum value of 8% and in the case of the third layer (C3) of 6%.

A slightly better activity resulted when the masterbatch ODO1 was present in a percentage of 2% by weight relative to the total weight of the film (C4), in which a percentage of adsorption of 16% after 48 hours was observed. In any case, the samples with masterbatch ODO1 gave worse or at best comparable results with respect to the reference package, free of odour adsorbers.

More satisfactory results were obtained when ODO2 was incorporated into the film (Figure 3).

In fact, in the case zinc ricinoleate was dispersed in the second layer of the film, an almost linear increase of percentage adsorbed H2S was observed (Ex. 9). After 4 hours the rate of adsorption was of 20%, after 24 hours of 35% and finally after 48 hours of 51%.

An unexpected result was observed by comparing the percentages of adsorption of H2S for the film incorporating ODO2 in the third layer (1% by weight) (Ex. 7) with the adsorption of the film having ODO2 dispersed in the second and third layers (2% by weight) (Ex. 8) (in both cases the weight percentage is relative to the weight of the total film).

In the first case, it reached a percentage of adsorbed H2S of 54% after 4 hours, 93% after 24 hours and 97% after 48 hours; in the second case of 65% after 4 hours, 96% after 24 hours and 98% after 48 hours. In both cases, total adsorption of H2S was achieved notwithstanding the film of Ex. 7 contained half the amount of ODO2 with respect of the content of the film of Ex. 8.

Apparently, 1% by weight of ODO2 if placed in the right layer (sufficiently thin layer) was sufficient to adsorb 50 ppm of H2S present in the gas mixture, so that the addition of further ODO2 up to 2% by weight with respect to the weight of the film total, did not make any noticeable improvement.

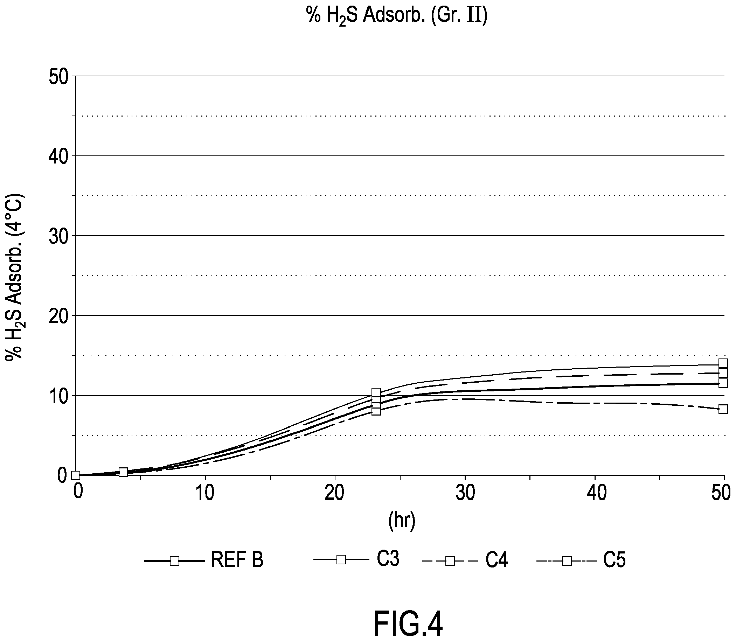

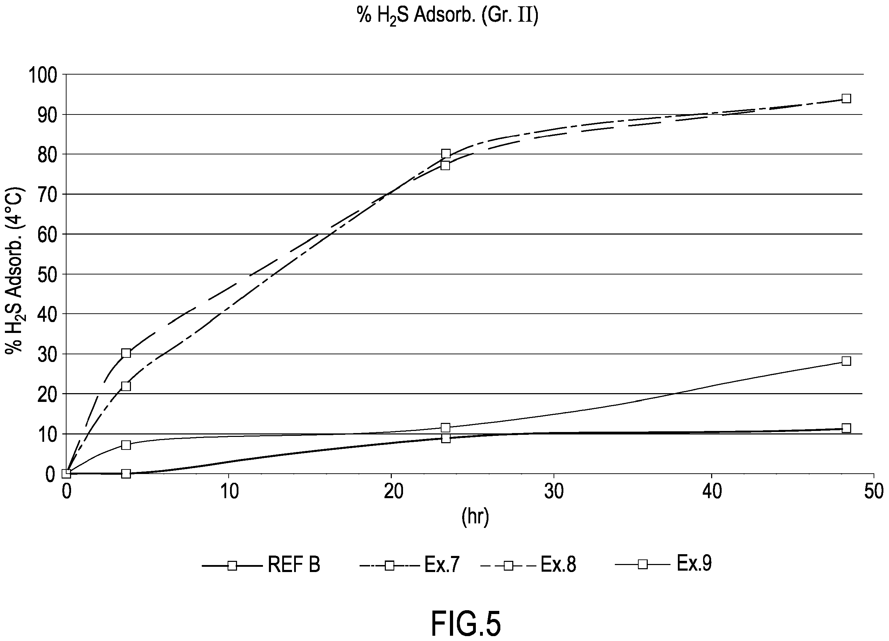

Figures 4 and 5 show the results obtained at a temperature of 4 ° C.

The masterbatch ODO2 still had the best adsorption properties, but there were a few differences compared to the adsorption profile at 20°C seen above.

Despite the adsorption percentages of the films of Ex. 7 and 8 reached after 48 hours of injection of the gaseous mixture were comparable to those achieved at a temperature of 20°C (see Fig. 5 vs Fig. 3), the speed of adsorption (so the percentages of H2S adsorbed after 4 and 24 hours) for both masterbatches ODO1 and ODO 2 were greatly reduced.

In detail, for ODO1 independently of layer distribution, after 4 hours the percentage of H2S adsorbed was about zero, and then increased, respectively, up to 8%, 11% and 10% at 24 hours after injection of the gas mixture. These values remained constant after 48 hours (Figure 4).

For films with ODO2 (Figure 5) after 4 hours from the injection, we had the following results: 8% of H2S adsorbed by the film of Ex. 9 with zinc ricinoleate in the second layer (1 % of ODO2), 24% of H2S adsorbed by the film of Ex. 7 with zinc ricinoleate in the third layer (1% of ODO2) and 30% of H2S adsorbed by the film of Ex. 8 with zinc ricinoleate in the second and third layer (2% of ODO2).

These percentages of adsorption at 4 °C were less than half the corresponding values at a temperature of 20°C. Even the values of adsorption at 24 hours were lower when compared with those measured at 20°C (respectively of 12%, 79% and 78%).

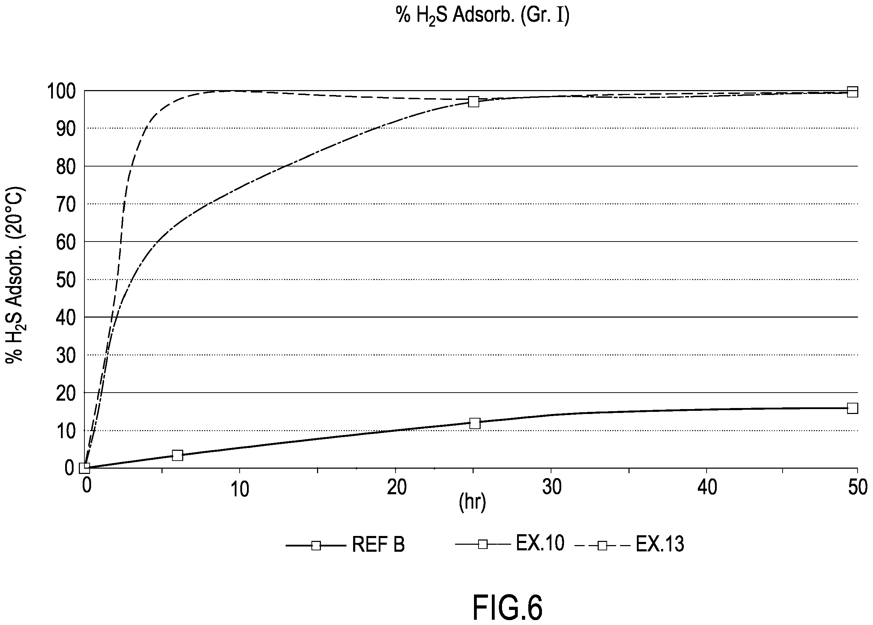

Finally, after 48 hours, the films of Ex. 7 and 8 (ODO2 in the third and in the third and second layers) showed percentages of H2S adsorption comparable with those at 20°C (reaching 93% adsorption). while for the film of Ex. 9 (with ODO2 in the second layer) the percentage continued to be lower (27%). Figure 6 shows the % of H2S adsorption for the reference film REF B and the inventive films of Ex. 10 and 13, respectively comprising ODO3 (zinc ionomer) in the third and second inner layer, in a % of 2.0 and 5.6% by weight with respect to the total weight of the film. As can be appreciated from the graph, both the inventive films have very good anti-odour properties. Particularly relevant was the activity of the film of Ex.10 that reached the maximum (100%) of adsorption rather quickly notwithstanding the amount of masterbatch in the film was one third of the one contained in the film of Ex. 13.

In the following Table 12, H2S adsorption data for the four layers films of Group III are shown:

Table 12: Group III films (at 20°C)

| Film | MB | Time (h) | % Absorbed Hydrogen sulphide |
|---|---|---|---|
| REF C | no | 4 | 2 |
| | | 24 | 5 |
| | | 48 | 13 |
| | | 144 | 13 |
| C6 (MB in the first layer) | ODO4 | 4 | 6 |
| | | 24 | 18 |
| | | 48 | 35 |
| | | 96 | 71 |
| C6a | ODO4 | 4 | 5 |
| | | 24 | 18 |
| | | 48 | 36 |
| | | 96 | 77 |
| ODO4: zinc oxide / magnesium oxide/ zeolites | | | |

As can be seen from the Table, the comparative films C6 and C6a were very similar in terms of H2S absorption.

Table 13: Group IV films (at 20°C)

| Film | MB | Time (h) | % Absorbed Hydrogen sulphide |
|---|---|---|---|
| REF D | | 4 | 1 |
| | no | 24 | 2 |
| | | 48 | 3 |
| | I | 72 | 3 |
| | | 144 | 6 |
| C7 (MB in the first layer) | | 4 | na |
| | ODO3 | 24 | na |
| | | 48 | na |
| | | 72 | na |
| | | 144 | na |
| Ex. 16 | | 4 | 70 |
| | ODO3 | 24 | 94 |
| | | 48 | 98 |
| | | 72 | 99 |
| | | 144 | 100 |
| Ex. 17 | | 4 | 8 |
| | ODO3 | 24 | 24 |
| | | 48 | 37 |
| | | 72 | 49 |
| | | 144 | 68 |
| ODO3: zinc ionomer | | | |

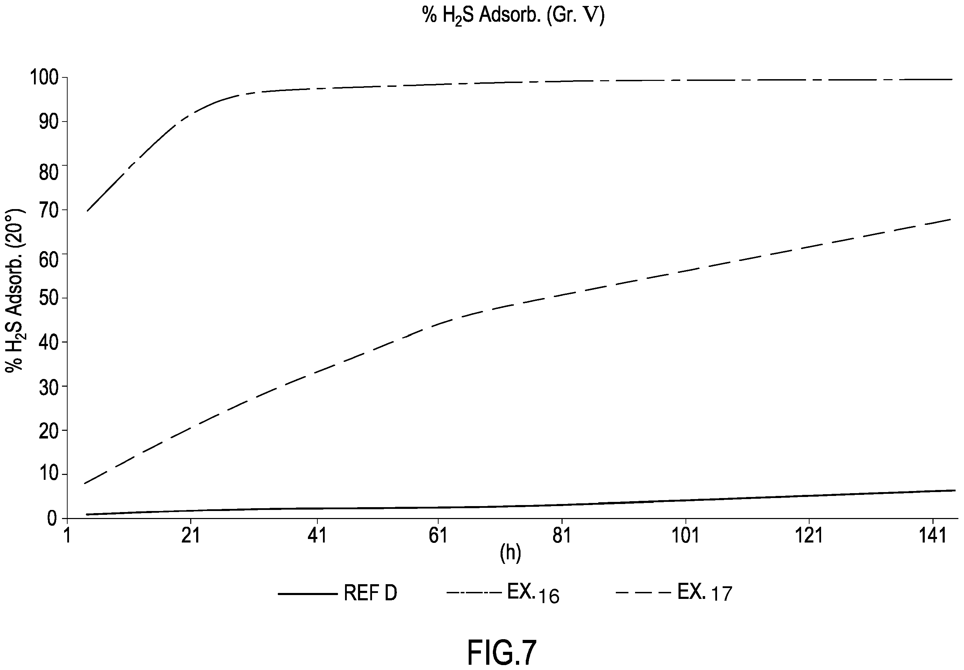

As can be seen from Table 13, both the inventive films of Ex. 16 and Ex. 17 performed better than the reference film; the film of Ex. 16 shows the best performances in term of hydrogen sulphide scavenging, while the film of Ex. 17 shows lower adsorption probably because of the zinc dispersion into the polar polyamide matrix. The adsorption profile of REF D represents the permeation trend. Figure 7 shows the % of H2S adsorption for the reference film REF D - that does not include any anti-odour compound - and for the inventive films of Ex. 16 and 17, comprising respectively ODO3 (zinc ionomer) in the second, fourth and sixth layer or in the third layer only.

As can be appreciated from the graph, both the inventive films have very good anti-odour properties. Particularly relevant was the activity of the film of Ex. 16 that reached the maximum (100%) of adsorption rather quickly.

Olfactory analysis: Panel test

The olfactory analysis gives a direct evaluation of the odour and it is based on the smell perception of a committee of people (panel) that evaluate the odours from the packages.

In this way, the measures are directly related to the characteristics of the odours and to their perception and possible issue of mixture complexity, interaction between components and detectability below the threshold of perception becomes irrelevant, since it is the odour overall effect which is measured. The panel test provides data useful for predicting the acceptance of the product by the consumer. The purpose of the panel test is the sensory evaluation of the quality of fresh poultry meat, in particular the appearance of the flesh, the smell immediately after opening of the packaging and after one minute. The test was done in four main sessions: session I using packaging bags of Group I (REF A, C1, C2 and Ex.1), session II using bags of Group II (REF B, Ex. 7, Ex. 8, Ex. 9), session III (bags of Group III, REF C, C6 and C6a) and session IV (bags of Group IV, REF D, C7, Ex. 16 and Ex. 17).

In all the sessions, the following parameters were applied:

- whole fresh chickens, with a weight of 1 kg, were packaged using bags of Group I, II or III; whole fresh chickens, with a weight of 1.2 to 1.4 kg, were packaged using bags of Group IV;
- the chickens were packed under vacuum (35 mbar);
- the chickens packaged using bags of Group I, II or III were kept in a cold chamber at a temperature of 4 °C in the dark, up to two hours before the beginning of the panel test; the chickens packaged using bags of Group IV were kept in a cold chamber at a temperature of 2-3°C in the dark, up to two hours before the beginning of the panel test;
- two hours before the panel test, the package to be tested was moved into a room at room temperature;
- the olfactory analyses were carried out after the storage period reported in the tables (up to 15 days);
- for each storage time and for each one of the tested multilayer films three packages were prepared;
- the test was a "blind test", namely the panellists were not able to recognize which film was used in each package, thus preventing any influence from testers' preferences or expectations.
- the environment where the test took place was free of external odours

To even out the judgment on the hedonic tone of the meat odours (feeling of pleasure or discomfort that we perceive in front of a given stimulus), the panellists were asked to express their opinion according to the following terminology (Table 14):

Table 14: Classification of hedonic tone

| 0 | Good (standard) |
|---|---|
| 1 | Acceptable |
| 2 | Slight odour |
| 3 | Mild odour |
| 4 | Bad odour |
| 5 | Unacceptable |

In addition, a brief judgment about the appearance of the meat was provided.

Panel test results

The panel test provided the olfactive evaluation of fresh poultry meat packaged in barrier bags comprising odour absorber. This test allowed assessing whether the odour absorber masked odours produced by a most advanced degradation of the meat, an index of unsuitability for consumption.

In fact, after 12 days (limit of shelf life guaranteed with this type of packaging) even the packages with the best odour absorbers developed unpleasant odours at opening and remained unacceptable or at acceptability limit in the following minutes.

In Table 15 below, the results of the first session of the panel test, in which bags of Group I were used, are reported:

Table15: panel test session I (Group I)

| days after packaging | Film | MB | Food appearance | Odour at opening | Odour 1 minute after opening |
|---|---|---|---|---|---|
| 7 | REF A | - | good | good | good |
| | C1 | ODO1 | good | good | good |
| | Ex. 1 | ODO2 | good | good | good |
| 10 | REF A | - | acceptable | slight | good |
| | C1 | ODO1 | acceptable | slight | good |
| | Ex. 1 | ODO2 | acceptable | (very) slight | good |

(continued)

| days after packaging | Film | MB | Food appearance | Odour at opening | Odour 1 minute after opening |
|---|---|---|---|---|---|
| 11 | REF A | - | acceptable | mild | acceptable |
| | C1 | ODO1 | acceptable | mild | acceptable |
| | Ex. 1 | ODO2 | acceptable | slight | acceptable |
| 12 | REF A | - | acceptable | mild/bad | acceptable |
| | C1 | ODO1 | acceptable | mild/ bad | acceptable/slight |
| | Ex. 1 | ODO2 | acceptable | mild | acceptable/slight |
| 13 | REF A | - | unacceptable | bad/ unacceptable | unacceptable |
| | C1 | ODO1 | unacceptable | bad/ unacceptable | unacceptable |
| | Ex.1 | ODO2 | unacceptable | bad/ unacceptable | unacceptable |

Table 16: panel test session I (Group I)

| days after packaging | Film | MB | Food appearance | Odour at opening | Odour 1 minute after opening |
|---|---|---|---|---|---|
| 6 | REF A | - | Good | Good | Good |
| | C2 | ODO4 | Good | Good | Good |
| 7 | REF A | - | Good | Good | Good |
| | C2 | ODO4 | Good | Good | Good |
| 8 | REF A | - | Acceptable wet | Acceptable | Acceptable |
| | C2 | ODO4 | Acceptable wet | Acceptable / Slight | Acceptable |
| 9 | REF A | - | Acceptable wet | Slight | Acceptable |
| | C2 | ODO4 | Acceptable wet | Acceptable / Slight | Acceptable |
| 10 | REF A | - | Wet borderline | Unacceptable | Acceptable |
| | C2 | ODO4 | Wet borderline | Slight | Acceptable |
| 13 | REF A | - | Too wet soft skin | Unacceptable | Unacceptable |
| | C2 | ODO4 | Too wet soft skin | Unacceptable | Unacceptable |

There is an important distinction between real food shelf life, which is the one guaranteed by microbiological analysis, and "apparent" shelf life, perceived by the customer through food odour and appearance.

Until day 10, all the packages ensured a good perception of the smell at opening; this was not due to the packaging itself, but to the food as meat degradation had not yet progressed enough to generate a concentration of unpleasant odours sufficient to be perceived.

The difference between anti-odour active and standard packaging was evident between day 11 and 12, when meat degradation became relevant; in these two days, we observed that the film of Ex. 1 with ODO2 masterbatch ensured a lower perception of smell at opening than the other two films (reference REF A and Comparative C1 with ODO1).

For these two last packages, between day 11 and 12, the customer at opening would detect unpleasant odours and would think that the meat was spoiled, attributing to the product an apparent shelf life lower than the real shelf-life.

In line with the data obtained in laboratory tests with the GC-FPD (% absorbed H2S), the bag made from the film of Ex. 1 (ODO2 masterbatch) offered the best performance for the adsorption of unpleasant odours produced by the processes of degradation of poultry meat.

For the first 12 days, all the chickens showed the usual behaviour of losing the unpleasant odour few minutes after opening of the bag. However, on the thirteenth day, all chickens produced a putrid and unacceptable odour that persisted even for minutes after opening.

In view of the effectiveness of ODO2 masterbatch in adsorbing unpleasant odours from poultry products, session II of the panel tests was carried out using only the bags of Group II comprising ODO2.

In Table17 below, the results of the second session are given:

Table 17: panel test session II (Group II)

| days after packaging | Film | MB | food appearance | Odour at opening | Odour 1 minute after opening |
|---|---|---|---|---|---|
| 7 | REF B | -- | good | good | good |
| | Ex. 7 | ODO2 | good | good | good |
| | Ex. 8 | ODO2 | good | good | good |
| | Ex. 9 | ODO2 | good | good | good |
| 10 | REF B | -- | acceptable | slight | good |
| | Ex. 7 | ODO2 | acceptable | very slight | good |
| | Ex. 8 | ODO2 | acceptable | good | good |
| | Ex. 9 | ODO2 | acceptable | slight | good |
| 11 | REF B | -- | acceptable | mild | acceptable |
| | Ex. 7 | ODO2 | acceptable | slight | acceptable |
| | Ex. 8 | ODO2 | acceptable | slight | acceptable |
| | Ex. 9 | ODO2 | acceptable | mild | acceptable |
| 12 | REF B | -- | acceptable | mild/bad | acceptable |
| | Ex. 7 | ODO2 | acceptable | mild | acceptable |
| | Ex. 8 | ODO2 | acceptable | slight | acceptable |
| | Ex. 9 | ODO2 | acceptable | mild | acceptable |
| 13 | REF B | -- | unacceptable | bad | acceptable/slight |
| | Ex. 7 | ODO2 | unacceptable | mild/bad | acceptable/slight |
| | Ex. 8 | ODO2 | unacceptable | mild/bad | acceptable/slight |
| | Ex. 9 | ODO2 | unacceptable | bad | acceptable/slight |

In this session, the panellists had a lower perception of $H_2S$ odour compared to the previous panel test.

The packed chickens developed a slight unpleasant odour a few minutes after the opening of the bag, except on day 13 when the smell appeared to be at the limit of acceptability. Also in this test, the greater difference in terms of perceived odours between packages with and without absorbers appeared from day 11 to day 12.

On day 11, the films of Ex. 7 and 8 - having ODO2 in the third and in the second/third layers respectively - show a comparably good anti-odour activity while the film of Ex. 9 that comprises ODO2 in the second layer only, performed less well. Surprisingly, the effectiveness of the masterbatch is not inversely related to the distance of the anti-odour layer from the films surface. In fact, the film incorporating the MB in the second layer (Ex. 9) seems less effective than the film in which the same MB is placed in the third layer only (Ex. 7) or in both layers (Ex. 8).

On day 12, the film of Ex. 8, with ODO2 in both the second and third layer, ensured a slight smell at opening, aligning the apparent shelf life of the meat with the real one.

Table18: panel test session III (Group III)

| Days after packaging | Film | MB | Food appearance | Odour at opening | Odour 1 minute after opening |
|---|---|---|---|---|---|
| 7 | REF C | - | Good | Acceptable /very slight | Good |
| | C6 | ODO4[e] | Good | Good | Good |
| | C6a | ODO4 | Good | Good | Good |
| 8 | REF C | - | Acceptable wet product | Slight | Acceptable |
| | C6 | ODO4[e] | Acceptable wet product | Acceptable /very slight | Acceptable |
| | C6a | ODO4 | Acceptable wet product | Acceptable /very slight | Acceptable |
| 9 | REF C | - | Borderline wet product discoloration | Unacceptable | Mild / Bad |
| | C6 | ODO4[e] | Borderline wet product discoloration | Bad / Unacceptable | Mild / Bad |
| | C6a | ODO4 | Borderline wet product discoloration | Bad / Unacceptable | Mild / Bad |
| e): anti-odour in the outer sealant layer ODO4: zinc oxide / magnesium oxide / zeolites | | | | | |

As can be seen from the Table above, the performance of the comparative film C6, having the anti-odour admixture (ODO4) in the outer sealant layer, and of the comparative film C6a - in which ODO4 is incorporated in the second layer - was quite similar.

Table 19: panel test session IV (Group IV)

| Days after packaging | Film | MB | Food appearance | Odour at opening | Odour 1 minute after opening |
|---|---|---|---|---|---|
| 8 | REF D | -- | Good | Chicken odour, good | Good |
| | C7 | ODO3 | na | na | na |
| | Ex. 16 | ODO3 | Good | Chicken odour, good | Good |
| | Ex. 17 | ODO3 | Good | Very slight odour, still good | Good |
| 10 | REF D | -- | Acceptable wet product | Slight odour, still good | Still Good |
| | C7 | ODO3 | na | na | na |
| | Ex. 17 | ODO3 | Good | Very slight odour, still good | Good |

(continued)

| Days after packaging | Film | MB | Food appearance | Odour at opening | Odour 1 minute after opening |
|---|---|---|---|---|---|
| 10 | REF D | -- | Acceptable wet product | Slight odour, still good | Still Good |
| | C7 | ODO3 | na | na | na |
| | Ex. 16 | ODO3 | Acceptable wet product | Very slight odour, still good | Still Good |
| | Ex. 17 | ODO3 | Acceptable wet product | Very slight odour, still good | Still Good |
| 13 | REF D | -- | Acceptable wet product | Moderate off-odour, | Still acceptable |
| | C7 | ODO3 | na | na | na |
| | Ex. 16 | ODO3 | Acceptable wet product | Very slight odour, still good | Acceptable |
| | Ex. 17 | ODO3 | Acceptable wet product | Slight off-odour | Acceptable |
| 14 | REF D | -- | Too wet and soft skin, unacceptable | Evident off odour, some sulphide and foecal odour | Still acceptable |
| | C7 | ODO3 | na | na | na |
| | Ex. 16 | ODO3 | Too wet and soft skin, unacceptable | Moderate off-odour | Still acceptable |
| | Ex. 17 | ODO3 | Too wet and soft skin, unacceptable | Moderate off-odour | Still acceptable |
| 15 | REF D | -- | Too wet and soft skin, unacceptable | Strong off-odour, strong sulphide odour | Slightly stale and putrid, borderline |
| | C7 | ODO3 | na | na | na |
| | Ex. 16 | ODO3 | Too wet and soft skin, unacceptable | Putrid and stale off-odour | Slightly stale and putrid, borderline |
| | Ex. 17 | ODO3 | Too wet and soft skin, unacceptable | Putrid and stale off-odour | Slightly stale and putrid, borderline |

ODO3: zinc ionomer

As can be seen from the Table above, the chickens packed in this tests resulted overall less stinking, in terms of the typical hydrogen sulphide odour, and less susceptible to release strong off-odour than the ones utilized in some of the previous trials. The film of Ex. 16 having the anti-odour mixture distributed in three layer was the best performing, while the film of Ex. 17 having the anti-odour mixture in the third layer only gave a slightly inferior odour performance.

Mechanical, shrink and optical properties

Reference, comparative and inventive films were subjected to evaluation of their mechanical, optical and shrink properties, according to the test methods previously reported.
The relevant data are collected in the following Tables 20 to 23.

Table 20: mechanical and optical properties (Group I)

| Gloss (g.u.) | angle 60° | 100 | 91 | 90 | 103 | 94 | 98 |
|---|---|---|---|---|---|---|---|

(continued)

| | | | | | | | |
|---|---|---|---|---|---|---|---|
| Elastic modulus (kg/cm$^2$) | LD | 2860 | 4690 | 3310 | | 3340 | |
| | TD | 2770 | 4300 | 2860 | | 3150 | |
| Tensile Strength (kg/cm$^2$) | LD | 753 | 807 | 793 | | 841 | |
| | TD | 776 | 834 | 923 | | 927 | |
| Elongation at break (%) | LD | 120 | 131 | 150 | | 150 | |
| | TD | 180 | 150 | 160 | | 130 | |

Regarding mechanical and physical properties, the data in Table 20 above show that in comparison with the reference film REF A (no anti-odour):

- the comparative film C1 (added with zeolite ODO1) has worse optics (higher haze before and after shrinking and slightly worse gloss);
- the films added with the masterbatch ODO2 (Ex. 1 and 2) have improved mechanics, comparable or even improved gloss and comparable haze, after shrink;
- the films added with the masterbatch ODO3 (Ex. 3 and 4), show better mechanical properties, acceptable gloss and much improved haze.

In conclusion, the presence of absorbers ODO2 and ODO3 according to the invention dispersed in inner layers does not alter significantly both the optical and mechanical characteristics of the films. Finally, the incorporation of the present anti-odours in the inner layers of the films according to the invention does not affect negatively the extrusion phase of the manufacturing process.

Table 21: mechanical and optical properties (Group II)

| | | REF B | C4 | Ex. 8 | Ex. 10 | Ex. 12 | Ex. 14 |
|---|---|---|---|---|---|---|---|
| Haze (5) | before shrink | 5.4 | 15.8 | 23.4 | 5.3 | 5.4 | 5.5 |
| | after shrink | 10.2 | 29 | 47.2 | 7.8 | 10.3 | 20.3 |
| Gloss (g.u.) | angle 60° | 109 | 96 | 95 | 104 | 86 | 98 |
| Elastic modulus (kg/cm2) | LD | 5330 | 5670 | 4810 | 5640 | 4680 | 4600 |
| | TD | 5090 | 5440 | 4080 | 5200 | 4740 | 4650 |
| Tensile Strength (kg/cm2) | LD | 885 | 865 | 765 | 940 | 910 | 820 |
| | TD | 755 | 740 | 760 | 870 | 800 | 770 |
| Elongation at break (%) | LD | 185 | 170 | 185 | 185 | 180 | 170 |
| | TD | 165 | 165 | 180 | 160 | 155 | 195 |

With reference to the data reported above, it appears that mechanical properties of reference, comparative and inventive films are similar.

Concerning optics, the comparative film C4 containing ODO1 (zeolites) and the film of the invention of Ex. 8 containing ODO2 (zinc ricinoleate) masterbatches dispersed in two adjacent layers in amount of 2% by weight (MB weight vs total film weight), showed slightly worse haze and gloss values compared with the reference film REF B.

On the other hand, the films according to the invention of Ex. 10, 12 and 14, in which the masterbatch ODO3 is incorporated respectively in the third, third and second layer, in amount of 2%, 4% and 11%, were decidedly better. In particular, the film of Ex. 1 0 showed high transparency even after shrink (see haze of 7.8) and gloss almost comparable to the reference film REF B, with no anti-odours.

Table 22: free shrink (%)

| Shrink (85°C) | L | T |
|---|---|---|
| REFA | 39 | 47 |

(continued)

| Shrink (85°C) | L | T |
|---|---|---|
| C1 | 36 | 46 |
| Ex. 1 | 38 | 50 |
| Ex. 2 | 37 | 48 |
| Ex. 3 | 37 | 47 |
| Ex. 4 | 37 | 49 |
| REFB | 33 | 39 |
| C3 | 30 | 40 |
| C4 | 30 | 39 |
| C5 | 31 | 37 |
| Ex. 7 | 32 | 37 |
| Ex. 8 | 33 | 38 |
| Ex. 9 | 33 | 39 |
| Ex. 10 | 30 | 38 |
| Ex. 11 | 30 | 38 |
| Ex. 12 | 28 | 40 |
| Ex. 13 | 42 | 47 |
| Ex. 14 | 41 | 48 |
| C2 | 38 | 47 |
| C2b | 44 | 49 |
| REFC | 32 | 40 |
| C6 | 36 | 44 |
| C6a | 32 | 38 |

Table 23: optical properties (Group IV)

| | | REF D | C7 | Ex. 16 | Ex. 17 |
|---|---|---|---|---|---|
| Haze (%) | before shrink | na | na | 5.2 | 5.3 |
| | after shrink | na | na | 9.5 | 9.2 |

With reference to the data reported above, the films according to the invention of Ex. 16 and Ex. 17, wherein the anti-odour mixture has been added to layers 2, 4 and 6 and only to layer 3 respectively, showed a very good result in term of optics, especially a high transparency even after shrink.

**Claims**

1.   A coextruded anti-odour, multilayer, packaging film comprising at least

a first outer sealant layer (a);
an optional inner gas barrier layer (b);
a second outer layer (c); and
an inner anti-odour layer (d) placed between the sealant layer (a) and the optional barrier layer (b), wherein said anti-odour layer (d) comprises

at least an anti-odour compound selected among metals (0), metal ionomers and their blends, in which said metal is selected among magnesium, calcium, copper, iron, cerium, zinc and lithium, zinc salts of organic acids of formula I

$$(RCOO)_2Zn \qquad I$$

in which R represents a linear or branched, saturated or unsaturated C3-C21 alkyl group and their blends, and optionally, at least a polymer selected among polyolefins, polyolefin derivatives, polyesters, polyamides or their blends,

wherein the content by weight of metal ionomers in the anti-odour layer(s) (d) is at most 90%.

2. The film according to claim 1 in which said anti-odour compound is selected among metals (0) and their blends.

3. The film according to claim 1 in which said anti-odour compound is selected among metal ionomers.

4. The film according to any one of claims 1 to 3 in which said metal is zinc.

5. The film according to claim 4 in which said anti-odour compound is selected among zinc salts of organic acids of formula I

$$(RCOO)_2Zn \qquad I$$

in which R represents a linear or branched, saturated or unsaturated $C_7$-$C_{17}$, more preferably $C_7$-$C_9$ or $C_{13}$-$C_{17}$ or $C_{15}$-$C_{17}$ alkyl group, optionally substituted with at least an OH group, and their blends, even more preferably said anti-odour compound is zinc ricinolate.

6. The film according to any one of claims 2 or 4 or 5 in which the content by weight of the anti-odour compound(s) in the anti-odour layer(s) (d) is from 0.1% to 10%, 0.2% to 8%, 0.2% to 2% 0.3 to 1%, in respect of said layer(s) (d) weight.

7. The film according to any one of claims 2 or 4 or 5 or 6 in which the total content by weight of metal(s), in the anti-odour layer(s) (d) is from 0.01% to 2%, preferably from 0.02% to 1%, more preferably from 0.02% to 0.8%, even more preferably from 0.07% to 0.7% in respect of said layer(s) (d) total weight.

8. The film according to claims 3 or 4 wherein the content by weight of metal ionomer, in the anti-odour layer(s) (d) is at most 80%, 70%, 60%, preferably at most 50%, 40%,30%, 20% or 10% in respect of said layer(s) (d) weight.

9. The film according to any one of claims 3, 4 or 8, wherein the content by weight of metal, in the anti-odour layer(s) (d) is from 0.001% to 1%, preferably from 0.02% to 0.5%, more preferably from 0.04% to 0.4%, in respect of layer(s) (d) weight.

10. The film according to any one of the previous claims in which said anti-odour layer(s) (d) has a total thickness lower than 50, lower than 20, preferably lower than 15, lower than 10, more preferably lower than 7, even more preferably lower than 5 microns.

11. The film according to any one of the previous claims in which said anti-odour layer(s) (d) comprise one or more polymers, selected among polyolefins, polyolefin derivatives, polyesters, polyamides or their blends, preferably selected among polyolefins or polyolefin derivatives and their blends.

12. The film according to any one of the previous claims wherein:

- the first outer sealant layer (a) comprises one or more polymers selected among polyolefin homo or copolymers and polyolefin derivatives and their blends, preferably selected among ethylene, propylene homo and copolymers, ethylene/alpha olefin copolymers, homogeneous ethylene/a-olefin copolymer, heterogeneous ethylene/a-olefin copolymer ethylene/vinyl acetate copolymers, ionomer resin, ethylene/ acrylic or methacrylic acid copolymer, ethylene/ acrylate or methacrylate copolymer, low density polyethylene, or their blends; and/or
- the inner optional gas barrier layer (b) is present and comprises a gas barrier polymer selected among polyvinylidene chloride polymers (PVDC), vinylidene chloride/ methyl acrylate copolymers, ethylenevinyl alcohol copolymers (EVOH), polyamides, acrylonitrile-based copolymers, polyesters and blends thereof, preferably

43

selected among polyvinylidene chloride polymers (PVDC) and vinylidene chloride / methyl acrylate copolymers or their blends, and/or
- the second outer layer (c) comprises one or more polymer(s) selected from the group consisting of polyolefins and their copolymers, polyamides, polyesters or styrene-based polymers, preferably comprises a propylene-based copolymer in an amount of from 75 to 95 wt % and an olefin block copolymer in an amount of from 5 to 25 wt % based on layer weight.

13. The film according to any one of the previous claims comprising more than one anti-odour layer (d), preferably two or three anti-odour layers (d).

14. The film according to any one of the previous claims wherein the first outer sealant layer (a) does not comprise any anti-odour compound as defined in any one of claims 1 to 5.

15. An anti-odour article for packaging made from the film according to anyone of claims 1 to 14 in the form of a seamless tube, a bag, a sachet, a pouch or a pad.

16. An anti-odour package comprising an anti-odour article for packaging according to claim 15 in the form of a seamless tube, a bag, a sachet, a pouch, or a pad and a product, preferably a food product, packaged therein or therewith.

17. An anti-odour package comprising a tray, a product, preferably a food product, packaged therein and an anti-odour lidding film sealed along the tray flange and closing said package, in which said film is a film according to any one of claims 1 to 14.

18. An anti-odour vacuum skin package (VSP) comprising a top film, a support and a product preferably a food product loaded onto said support, said film being draped over the product and sealed to the surface of the support not covered by the product, wherein said top film and/or said support is a film according to any one of claims 1 to 14.

19. Use of anti-odour multilayer film according to anyone of claims 1 to 14 for packaging smell-developing products, preferably smell-developing food products, especially poultry.

**Patentansprüche**

1. Coextrudierte, geruchshemmende, mehrschichtige Verpackungsfolie, umfassend wenigstens

eine erste äußere Versiegelungsschicht (a);
eine optionale innere Gasbarriereschicht (b);
eine zweite äußere Schicht (c); und
eine innere geruchshemmende Schicht (d), welche zwischen der Versiegelungsschicht (a) und der optionalen Barriereschicht (b) platziert ist, wobei die geruchshemmende Schicht (d) umfasst
wenigstens eine geruchshemmende Verbindung, welche aus Metallen (0), Metall-Ionomeren und deren Blends ausgewählt ist, wobei das Metall aus Magnesium, Calcium, Kupfer, Eisen, Cer, Zink und Lithium, Zinksalzen organischer Säuren der Formel I ausgewählt ist,

$$(RCOO)_2Zn \qquad I$$

wobei R eine lineare oder verzweigte, gesättigte oder ungesättigte C3-C21-Alkylgruppe und deren Blends darstellt, und
optional wenigstens ein Polymer, welches aus Polyolefinen, Polyolefin-Derivaten, Polyestern, Polyamiden oder deren Blends ausgewählt ist,
wobei der Gewichtsgehalt von Metall-Ionomeren in der/den geruchshemmenden Schicht(en) höchstens 90 % beträgt.

2. Folie nach Anspruch 1, wobei die geruchshemmende Verbindung aus Metallen (0) und deren Blends ausgewählt ist.

3. Folie nach Anspruch 1, wobei die geruchshemmende Verbindung aus Metall-Ionomeren ausgewählt ist.

4. Folie nach einem der Ansprüche 1 bis 3, wobei das Metall Zink ist.

5. Folie nach Anspruch 4, wobei die geruchshemmende Verbindung aus Zinksalzen organischer Säuren der Formel I ausgewählt ist,

$$(RCOO)_2Zn \qquad I$$

wobei R eine lineare oder verzweigte, gesättigte oder ungesättigte $C_7$-$C_{17}$-, bevorzugter $C_7$-$C_9$- oder $C_{13}$-$C_{17}$- oder $C_{15}$-$C_{17}$-, Alkylgruppe, optional substituiert mit wenigstens einer OH-Gruppe, und deren Blends darstellt, bevorzugter wobei die geruchshemmende Verbindung Zink-Ricinolat ist.

6. Folie nach einem der Ansprüche 2 oder 4 oder 5, wobei der Gewichtsgehalt der geruchshemmenden Verbindung(en) in der/den geruchshemmenden Schicht(en) (d) von 0,1 % bis 10 %, 0,2 % bis 8 %, 0,2 % bis 2 %, 0,3 % bis 1 % in Bezug auf ein Gewicht der Schicht(en) (d) beträgt.

7. Folie nach einem der Ansprüche 2 oder 4 oder 5 oder 6, wobei der gesamte Gewichtsgehalt des/der Metalls/Metalle in der/den geruchshemmenden Schicht(en) (d) von 0,01 % bis 2 %, vorzugsweise von 0,02 % bis 1 %, bevorzugter von 0,02 % bis 0,8 %, noch bevorzugter von 0,07 % bis 0,7 %, in Bezug auf ein gesamtes Gewicht der Schicht(en) (d) beträgt.

8. Folie nach den Ansprüchen 3 oder 4, wobei der Gewichtsgehalt von Metall-Ionomer in der/den geruchshemmenden Schicht(en) (d) höchstens 80 %, 70 %, 60 %, vorzugsweise höchstens 50 %, 40 %, 30 %, 20 % oder 10 %, in Bezug auf ein Gewicht der Schicht(en) (d) beträgt.

9. Folie nach einem der Ansprüche 3, 4 oder 8, wobei der Gewichtsgehalt von Metall in der/den geruchshemmenden Schicht(en) (d) von 0,001 % bis 1 %, vorzugsweise von 0,02 % bis 0,5 %, bevorzugter von 0,04 % bis 0,4 %, in Bezug auf ein Gewicht der Schicht(en) (d) beträgt.

10. Folie nach einem der vorhergehenden Ansprüche, wobei die geruchshemmende(n) Schicht(en) (d) eine gesamte Dicke von weniger als 50, weniger als 20, vorzugsweise weniger als 15, weniger als 10, bevorzugter weniger als 7, noch bevorzugter weniger als 5, Mikrometer aufweist/aufweisen.

11. Folie nach einem der vorhergehenden Ansprüche, wobei die geruchshemmende(n) Schicht(en) (d) ein oder mehrere Polymer(e) umfasst/umfassen, welche(s) aus Polyolefinen, Polyolefin-Derivaten, Polyestern, Polyamiden oder deren Blends ausgewählt ist/sind, vorzugweise aus Polyolefinen oder Polyolefin-Derivaten und deren Blends ausgewählt ist/sind.

12. Folie nach einem der vorhergehenden Ansprüche, wobei:

    - die erste äußere Versiegelungsschicht (a) ein oder mehrere Polymer(e) umfasst, welche(s) aus Polyolefin-Homo- oder -Copolymeren und Polyolefin-Derivaten und deren Blends ausgewählt ist/sind, vorzugsweise aus Ethylen-, Propylen-Homo- und -Copolymeren, Ethylen/alpha-Olefin-Copolymeren, homogenem Ethylen/a-Olefin-Copolymer, heterogenem Ethylen/a-Olefin-Copolymer, Ethylen/Vinylacetat-Copolymeren, Ionomerharz, Ethylen/Acryl- oder Methacrylsäure-Copolymer, Ethylen/Acrylat- oder Methacrylat-Copolymer, Polyethylen niedriger Dichte oder deren Blends ausgewählt ist/sind; und/oder
    - die innere optionale Gasbarriereschicht (b) vorhanden ist und ein Gasbarrierepolymer umfasst, welches aus Polyvinylidenchloridpolymeren (PVDC), Vinylidenchlorid/Methylacrylat-Copolymeren, Ethylen-Vinylalkohol-Copolymeren (EVOH), Polyamiden, Copolymeren auf Acrylnitrilbasis, Polyestern und Blends davon ausgewählt ist, vorzugsweise aus Polyvinylidenchloridpolymeren (PVDC) und Vinylidenchlorid/Methylacrylat-Copolymeren oder deren Blends ausgewählt ist; und/oder
    - die zweite äußere Schicht (c) ein oder mehrere Polymer(e) umfasst, welche(s) aus der Gruppe ausgewählt ist/sind, welche aus Polyolefinen und deren Copolymeren, Polyamiden, Polyestern oder Polymeren auf Styrolbasis besteht und vorzugsweise ein Copolymer auf Propylenbasis in einer Menge von 75 bis 95 Gew.-% und ein Olefinblockcopolymer in einer Menge von 5 bis 25 Gew.-% umfasst, basierend auf einem Gewicht der Schicht.

13. Folie nach einem der vorhergehenden Ansprüche, umfassend mehr als eine geruchshemmende Schicht (d), vorzugsweise zwei oder drei geruchshemmende Schichten (d).

14. Folie nach einem der vorhergehenden Ansprüche, wobei die erste äußere Versiegelungsschicht (a) keine wie in einem der Ansprüche 1 bis 5 definierte geruchshemmende Verbindung umfasst.

**15.** Geruchshemmender Gegenstand zum Verpacken, welcher aus der Folie nach einem der Ansprüche 1 bis 14 in der Form eines nahtlosen Schlauchs, einer Tasche, eines Päckchens, eines Beutels oder eines Pads hergestellt ist.

**16.** Geruchshemmende Verpackung, umfassend einen geruchshemmenden Gegenstand zum Verpacken nach Anspruch 15 in der Form eines nahtlosen Schlauchs, einer Tasche, eines Päckchens, eines Beutels oder eines Pads und ein Produkt, vorzugsweise ein Nahrungsmittelprodukt, welches darin oder damit verpackt ist.

**17.** Geruchshemmende Verpackung, umfassend eine Schale, ein Produkt, vorzugsweise ein Nahrungsmittelprodukt, welches darin verpackt ist, und eine geruchshemmende Deckelfolie, welche entlang des Schalenflansches versiegelt ist und die Verpackung verschließt, wobei die Folie eine Folie nach einem der Ansprüche 1 bis 14 ist.

**18.** Geruchshemmende Vakuumhautverpackung (VSP - vacuum skin package), umfassend eine obere Folie, einen Träger und ein Produkt, vorzugsweise ein Nahrungsmittelprodukt, welches auf den Träger geladen ist, wobei die Folie über das Produkt drapiert ist und an der Fläche des Trägers versiegelt ist, welche nicht von dem Produkt abgedeckt ist, wobei die obere Folie und/oder der Träger eine Folie nach einem der Ansprüche 1 bis 14 ist.

**19.** Verwendung einer geruchshemmenden, mehrschichtigen Folie nach einem der Ansprüche 1 bis 14 zum Verpacken geruchsentwickelnder Produkte, vorzugsweise geruchsentwickelnder Nahrungsmittelprodukte, insbesondere Geflügel.

**Revendications**

**1.** Film d'emballage multicouche anti-odeur co-extrudé, comprenant au moins

une première couche externe d'agent d'étanchéité (a) ;
une couche facultative interne (b) formant barrière au gaz ;
une seconde couche externe (c) ; et
une couche interne anti-odeur (d) placée entre la couche d'agent d'étanchéité (a) et la couche facultative (b) formant barrière,
ladite couche anti-odeur (d) comprenant au moins un composé anti-odeur sélectionné parmi les métaux (0), les ionomères métalliques et leurs mélanges, dans lequel ledit métal est sélectionné parmi le magnésium, le calcium, le cuivre, le fer, le cérium, le zinc et le lithium, les sels de zinc d'acides organiques de formule I

$$(RCOO)_2Zn$$

dans laquelle R représente un groupe alkyle en $C_3$ à $C_{21}$ linéaire ou ramifié, saturé ou insaturé, et leurs mélanges, et
éventuellement, au moins un polymère sélectionné parmi les polyoléfines, les dérivés de polyoléfine, les polyesters, les polyamides ou leurs mélanges,
la teneur en poids des ionomères métalliques dans la(les) couche(s) anti-odeur(s) (d) étant d'au plus 90 %.

**2.** Film selon la revendication 1, dans lequel ledit composé anti-odeur est sélectionné parmi les métaux (0) et leurs mélanges.

**3.** Film selon la revendication 1, dans lequel ledit composé anti-odeur est sélectionné parmi les ionomères métalliques.

**4.** Film selon l'une quelconque des revendications 1 à 3, dans lequel ledit métal est le zinc.

**5.** Film selon la revendication 4, dans lequel ledit composé anti-odeur est sélectionné parmi les sels de zinc d'acides organiques de formule I

$$(RCOO)_2Zn$$

dans laquelle R représente un groupe alkyle linéaire ou ramifié, saturé ou insaturé $C_7$ - $C_{17}$, plus préférablement $C_7$-$C_9$ ou $C_{13}$-$C_{17}$ ou $C_{15}$-$C_{17}$, éventuellement substitué par au moins un groupe OH, et leurs mélanges, même plus préférablement ledit composé anti-odeur étant le ricinolate de zinc.

**6.** Film selon l'une quelconque des revendications 2 ou 4 ou 5, dans lequel la teneur en poids du(des) composé(s) anti-odeur(s) dans la(les) couche(s) anti-odeur(s) (d) est de 0,1 % à 10 %, de 0,2 % à 8 %, de 0,2 % à 2 %, de 0,3 à 1 %, par rapport au poids de ladite (desdites) couche(s) (d).

**7.** Film selon l'une quelconque des revendications 2 ou 4 ou 5 ou 6, dans lequel la teneur totale en poids du(des) métal(aux), dans la(les) couche(s) anti-odeur(s) (d) est de 0,01 % à 2 %, préférablement de 0,02 % à 1 %, plus préférablement de 0,02 % à 0,8 %, même plus préférablement de 0,07 % à 0,7 % par rapport au poids total de ladite (desdites) couche(s) (d).

**8.** Film selon les revendications 3 ou 4, la teneur en poids du ionomère métallique, dans la(les) couche(s) anti-odeur(s) (d) étant d'au plus 80 %, 70 %, 60 %, préférablement d'au plus 50 %, 40 %,30 %, 20 % ou 10 % par rapport au poids de ladite (desdites) couche(s) (d).

**9.** Film selon l'une quelconque des revendications 3, 4 ou 8, la teneur en poids du métal, dans la(les) couche(s) anti-odeur(s) (d) étant de 0,001 % à 1 %, préférablement de 0,02 % à 0,5 %, plus préférablement de 0,04 % à 0,4 %, par rapport au poids de la(les) couche(s) (d).

**10.** Film selon l'une quelconque des revendications précédentes, dans lequel ladite(lesdites) couche(s) anti-odeur(s) (d) ont une épaisseur totale inférieure à 50, inférieure à 20, préférablement inférieure à 15, inférieure à 10, plus préférablement inférieure à 7, même plus préférablement inférieure à 5 microns.

**11.** Film selon l'une quelconque des revendications précédentes, dans lequel ladite(lesdites) couche(s) anti-odeur(s) (d) comprend(comprennent) un ou plusieurs polymères, sélectionnés parmi les polyoléfines, les dérivés de polyoléfine, les polyesters, les polyamides ou leurs mélanges, préférablement sélectionnés parmi les polyoléfines ou les dérivés de polyoléfine et leurs mélanges.

**12.** Film selon l'une quelconque des revendications précédentes :

- la première couche externe d'agent d'étanchéité (a) comprenant un ou plusieurs polymères sélectionnés parmi les homo ou copolymères de polyoléfine et les dérivés de polyoléfine et leurs mélanges, préférablement sélectionnés parmi l'éthylène, les homo et copolymères de propylène, les copolymères d'éthylène/$\alpha$-oléfine, le copolymère homogène d'éthylène/$\alpha$-oléfine, le copolymère hétérogène d'éthylène/$\alpha$-oléfine, les copolymères d'éthylène/acétate de vinyle, la résine ionomère, le copolymère d'éthylène/acide acrylique ou méthacrylique, le copolymère d'éthylène/acrylate ou méthacrylate, le polyéthylène basse densité, ou leurs mélanges ; et/ou
- la couche facultative interne (b) formant barrière au gaz étant présente et comprenant un polymère formant barrière au gaz sélectionné parmi les polymères de chlorure de polyvinylidène (PVDC), les copolymères de chlorure de vinylidène/acrylate de méthyle, les copolymères d'éthylène - alcool de vinyle (EVOH), les polyamides, les copolymères à base d'acrylonitrile, les polyesters et leurs mélanges, préférablement sélectionné parmi les polymères de chlorure de polyvinylidène (PVDC) et les copolymères de chlorure de vinylidène/acrylate de méthyle ou leurs mélanges, et/ou
- la seconde couche externe (c) comprenant un ou plusieurs polymère(s) sélectionné(s) dans le groupe constitué des polyoléfines et de leurs copolymères, des polyamides, des polyesters ou des polymères à base de styrène, préférablement comprenant un copolymère à base de propylène en une quantité de 75 à 95 % en poids et un copolymère à blocs à base d'oléfine en une quantité de 5 à 25 % en poids par rapport au poids de la couche.

**13.** Film selon l'une quelconque des revendications précédentes comprenant plus d'une couche anti-odeur (d), préférablement deux ou trois couches anti-odeurs (d).

**14.** Film selon l'une quelconque des revendications précédentes, la première couche externe d'agent d'étanchéité (a) ne comprenant aucun composé anti-odeur tel que défini selon l'une quelconque des revendications 1 à 5.

**15.** Article anti-odeur pour l'emballage fabriqué à partir du film selon l'une quelconque des revendications 1 à 14 sous la forme d'un tube sans joint, d'un sac, d'un sachet, d'une poche ou d'un tampon.

**16.** Emballage anti-odeur comprenant un article anti-odeur pour l'emballage selon la revendication 15 sous la forme d'un tube sans joint, d'un sac, d'un sachet, d'une poche, ou d'un tampon et un produit, préférablement un produit alimentaire, emballé à l'intérieur ou avec celui-ci.

17. Emballage anti-odeur comprenant un plateau, un produit, préférablement un produit alimentaire, emballé à l'intérieur et un film formant couvercle anti-odeur scellé le long de la collerette du plateau et enfermant ledit emballage, dans lequel ledit film est un film selon l'une quelconque des revendications 1 à 14.

18. Emballage sous vide anti-odeur de la peau (VSP) comprenant un film supérieur, un support et un produit préférablement un produit alimentaire chargé sur ledit support, ledit film étant drapé sur le produit et scellé à la surface du support non recouverte par le produit, ledit film supérieur et/ou ledit support étant un film selon l'une quelconque des revendications 1 à 14.

19. Utilisation d'un film multicouche anti-odeur selon l'une quelconque des revendications 1 à 14 pour l'emballage de produits développant une odeur, préférablement de produits alimentaires développant une odeur, spécialement de volaille.

% H$_2$S Adsorb. (Gr. I)

FIG.1

EP 3 383 651 B1

FIG.2

EP 3 383 651 B1

% H$_2$S Adsorb. (Gr. II)

FIG.3

EP 3 383 651 B1

% H₂S Adsorb. (Gr. II)

FIG.4

% H$_2$S Adsorb. (Gr. II)

FIG.5

EP 3 383 651 B1

FIG.6

FIG.7

**EP 3 383 651 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006011926 A
- JP 2014061682 A
- US 20080292225 A
- US 4302565 A, Goeke
- US 4302566 A, Karol
- US 5026798 A, Canich
- US 6764729 B
- US 6790468 B
- EP 2064056 B1
- WO 2014184256 A